# EUROPEAN PATENT SPECIFICATION

(11) **EP 1 860 468 B1**
(45) Date of publication and mention of the grant of the patent: **28.11.2012**
(21) Application number: 06713931.1
(22) Date of filing: 10.02.2006
(51) Int. Cl.: G02B 5/128, B32B 5/16, B32B 7/02

(54) **RETROREFLECTION SHEET**
RETROREFLEKTIERENDE FOLIE
FEUILLE RÉTRORÉFLÉCHISSANTE

(30) Priority: 10.02.2005 JP 2005035231
(43) Date of publication of application: 28.11.2007
(73) Proprietor: NIPPON CARBIDE KOGYO KABUSHIKI KAISHA, Tokyo 108-8466 (JP)
(72) Inventor: NOMURA, Futoshi, ma-shi, Toyama, 9393551 (JP); MIMURA, Ikuo, Toyama, 9370061 (JP); NAKAZAWA, Hiroki Nippon Carbide Ind, Zone Hangzhou, Zhejiang (CN)
(74) Representative: Albrecht, Thomas
(86) International application number: PCT/JP2006/302790
(87) International publication number: WO 2006/085690

(56) References cited:
- EP-A- 1 225 554
- EP-A- 1 666 925
- EP-A1- 1 225 554
- WO-A1-98/22837
- JP-A- 2000 298 206
- JP-A- 2003 029 012
- JP-A- 2005 024 990
- JP-U- 56 035 659

## Description

### Technical Field

This invention relates to a retroreflective sheeting which has novel construction and exhibits tamper-proof effect.

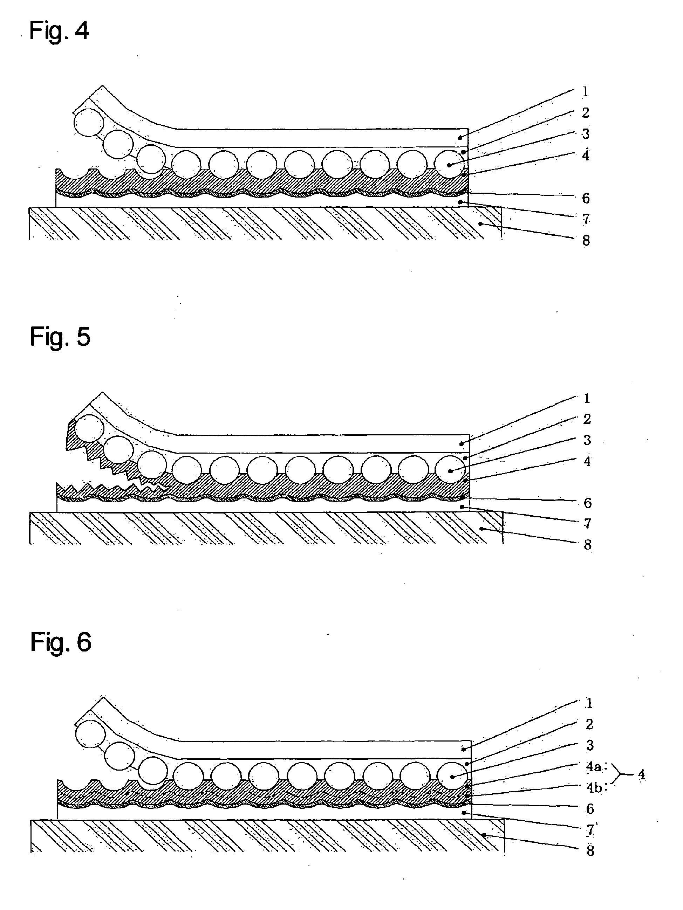

More specifically, the invention relates to enclosed lens- type retroreflective sheeting which, as illustrated in Fig. 4 for example, comprises at least a large number of glass microbeads (3), a holding layer (2) formed of light-transmissive resin, which holds the glass beads (3), a specular reflective layer (6) which reflects entering light, and at least one layer of focusing layer (4) formed of light-transmissive resin, which is provided between the glass beads (3) and the specular reflective layer (6), which is characterized in that an adhesive layer (7) is provided under the specular reflective layer (6) of the retroreflective sheeting so that it can be stuck on substrate (8) by the adhesive layer (7) and an attempt to peel off the retroreflective sheeting from the substrate (8) results in interlayer peeling of the focusing layer (4) from the glass beads (3) and /or the holding layer (2), and /or in destruction of the focusing layer (4), whereby damaging or destroying the sheeting's retroreflectivity in which the resin constituting the focusing layer (4) is acrylic resin except for alicyclic acrylic resin, polyurethane resin, alkyd resin, butyral resin, polyester resin, or a mixture of two or more of these.

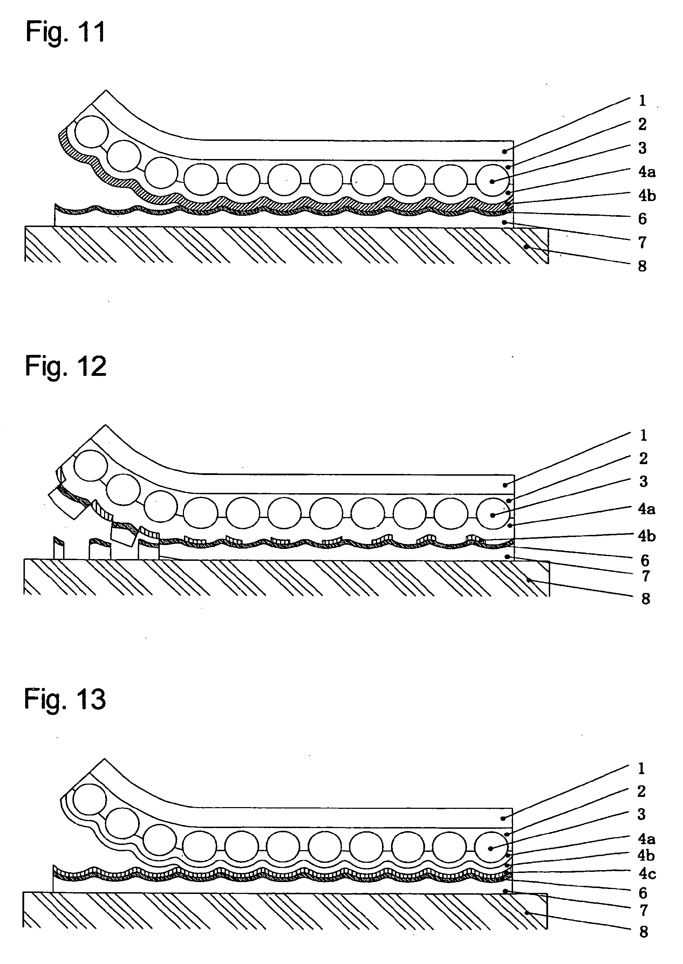

The invention furthermore relates to retroreflective sheeting as defined above which, as illustrated in Fig. 11 for example, comprises a large number of glass microbeads(3), a holding layer (2) formed of light-transmissive resin, which holds the glass beads (3), a specular reflection layer (6) which reflects entering light, and a light-transmissive focusing layer (4) which is provided between the glass beads (3) and the specular reflective layer (6), the sheet being stuck on a substrate (8) by an adhesive layer (7) provided under the specular reflective layer (6), wherein the focusing layer (4) is composed of at least two layers of focus-forming layers (4a, 4b, ...), at least one of the layers which is not in contact with either the glass beads (3) or the holding layer (2) is made of silicon-containing compound, and which is so constructed that an attempt to peel off the retroreflective sheeting from the substrate results in delamination between the focusing layer which contains the silicon-containing compound and a layer in contact therewith and /or destruction of at least one layer containing the silicon-containing compound, whereby damaging or destroying the sheeting's retroreflective ability.

The invention also relates to retroreflective sheeting which exhibits tamper-preventing effect useful for signs such as traffic signs and construction signs; number plates on vehicles such as automobiles or motorcycles; safety materials such as clothing and life preservers; marking on signboards; various kinds of certification stickers; reflective plates used for visible light-, laser light- or infrared light-reflection type sensors; and the like.

Specifically, the invention aims at provision of retroreflective sheeting useful in various kinds of certification stickers, which, when the retroreflective sheeting once adhered to substrate is peeled off for the purpose of using it at a different place, the focusing layer provided in the sheeting separates from the glass beads to cause the sheet to lose its retroreflective ability, whereby rendering it impossible to put the sheeting to any diverted use (hereafter this effect is referred to as tamper-preventing effect or re-peeling preventing effect). The focusing layer is composed of acrylic resin except for alicyclic acrylic resin, polyurethane resin, alkyd resin, butyral resin, polyester resin or a mixture thereof.

More specifically, the invention aims at provision of retroreflective sheeting which can be used in reflection type stickers capable of stably maintaining the tamper-preventing effect, withstanding prolonged use under high temperatures.

### Background Art

Hereinafter we list the prior art references to the present invention which have come into our knowledge, as Patent References I - 11 and discuss those references in detail.
[Patent Reference 1] EP0102818A2
(Patent Reference 2) JP Patent No. 3,224,040
(Patent Reference 3) WO97/30363
(Patent Reference 4) JP2000-265012A
(Patent Reference 5) WO99/55791
(Patent Reference 6) WO97-44769
(Patent Reference 7) JP2003-29012A
(Patent Reference 8) WO01/02883
(Patent Reference 9) EP1225554A1
(Patent Reference 10) EP 1 666 925
(Patent Reference 11) JP 2000-298206

Retroreflective sheetings which reflect entering light toward the light source are well known heretofore, and have been widely used in the fields of application as described in the above, where their retroreflectivity is utilized. In particular, use of retroreflective sheetings for various kinds of certification stickers is increasing recently.

Enclosed lens-type retroreflective sheeting using microsize glass beads and having a specular reflective layer is well known among such retroreflective sheetings. An enclosed lens-type retroreflective sheeting is disclosed in detail in, for example, EP0 102 818 A2 (Patent Reference 1) to Belisle.

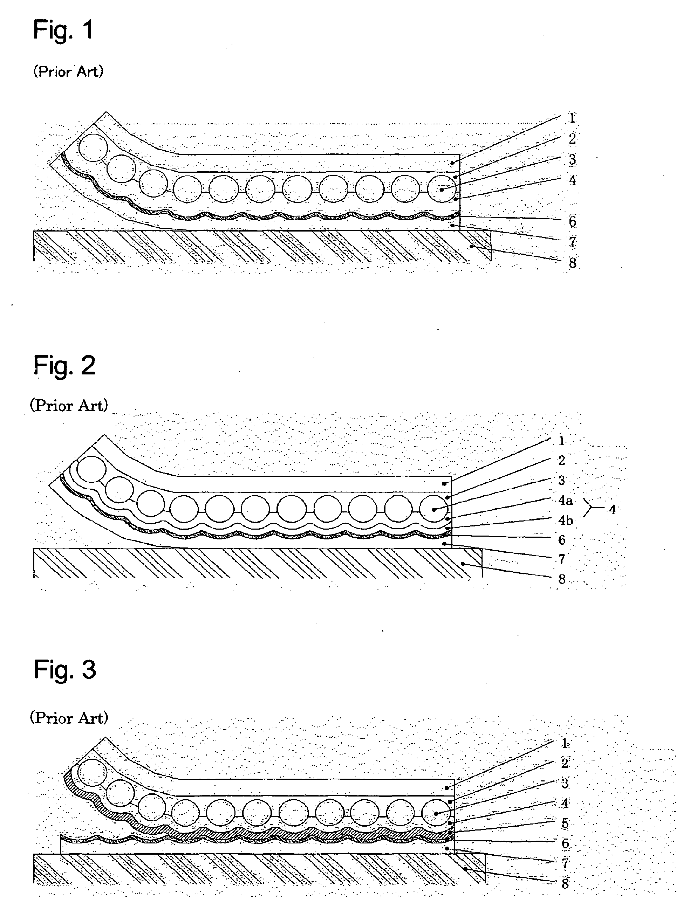

The construction of such an enclosed lens-type retroreflective sheeting comprises, as illustrated in Fig. 1, a surface layer (1), non-continuous glass beads (3), a holding layer (2) which holds the glass beads (3), a specular reflective layer (6) which reflects entering light, a single focusing layer (4) which is provided between the glass beads (3) and the specular reflective layer (6) and a binder layer (7).

As resins for making the surface layer (1) and holding layer (2), acrylic resin, polyethylene terephthalate resin, other polyester resin, butyral resin, vinyl chloride resin, urethane resin, alkyd resin, fluorine-containing resin and the like have been used heretofore. For the uses requiring pliability such as safety materials including clothing and life preservers, flexible resins having an elongation-at-break of at least 40% when made into sheet, for example, vinyl chloride resin, urethane resin or the like are used, but the resins have the defects of relatively low weatherability and durability.

On the other hand, for the uses requiring durability such as signs including traffic signs and construction signs and number plates for vehicles such as automobiles and motorcycles, acrylic resin, alkyd resin, polyester resin or the like are preferred. Such resins showing high durability, however, relatively lack pliability and are used to make retroreflective sheeting whose elongation-at-break is not more than 36%.

Also as resins used for the focusing layer (4), acrylic resin, polyester resin, butyral resin, acetal resin, alkyd resin and the like are used. These resins show good intimate adhesion to the holding layer (2) or the specular reflective layer (6) and have improved weatherability and durability of the retroreflective sheeting. In a retroreflective sheeting in which such a resin is used for the focusing layer (4), normally peeling between the layers constituting the sheeting does not occur.

Also a retroreflective sheeting in which the focusing layer (4) is made of two layers is known. JP3224040 (Patent Reference 2) to Fujino, et al. discloses, as illustrated in Fig. 2, an enclosed lens-type retroreflective sheeting having two focusing layers (4a) and (4b) concurrently. While both of the layers are made of acrylic resin, acrylic resins of different structures are used.

Furthermore, various proposals have been made to impart tamper-preventing effect to the resin sheeting to be used for certification stickers and the like.

JP2000-265012A to Nishijima (Patent Reference 4) discloses a film for identification labels made of cyclic olefin polymer. The reference states the film may be a multilayer film comprising at least one resin layer which is made of the cyclic olefin polymer. Because this film for identification labels excel in easy breakability, when it is used in an identification label, the label is readily torn under externally exerted force and exhibits an effect for preventing its diverted use. Again, because this film for identification labels are easily soluble in many organic solvents, indications on the identification labels cannot be modified with such solvents, which property also is useful for tamper-prevention. Furthermore, because the identification labels stuck on goods or parts can be completely dissolved away with the solvents, they can be easily recycled. Reference 4 utilizes the easy breakability of the film, but it nowhere refers to a technology to evidence tampering by facilitating interfacial separation between adjacent layers. There is neither a disclosure, moreover, concerning retroreflectivity of this film for identification labels, nor one concerning the damage or loss in retroreflectivity of a retroreflective sheeting by separation of the glass beads from the focusing layer when the sheeting is peeled off for tampering or diverted use. Still in addition, the cyclic olefin polymer is highly crystalline and lacks transparency, which makes it unfit for use as a focusing layer.

Various proposals have been made also for prevention of tampering retroreflective sheeting. WO97/30363 to Faykish, et al. (Patent Reference 3), WO99/55791 to Jung, et al. (Patent Reference 5) and WO97/44769 to Cleckel, et al. (Patent reference 6) disclose tamper-preventing retroreflective sheetings which have a retroreflective layer. The tamper-preventing retroreflective sheetings disclosed in these References, however, are provided with their tamper-preventing layer independently of the retroreflective layer. Hence the layer having retroreflective function can remain intact when the sheetings fail (are peeled off) at their breakable layer (peelable layer), occasionally allowing re-use of the retroreflective layer.

JP2003-29012A to Wada, et al. (Patent Reference 7) discloses a retroreflector characterized by comprising a reflective substrate layer, a stretchable layer which is stretchable in the direction paralleling with the substrate layer and transparent microspheres disposed on the front side of the reflective substrate layer. However, this retroreflector is designed to lose its retroreflectivity by the effect of the stretchable layer. The reference contains no disclosure concerning an easily breakable layer or tamper-prevention of hard sheet whose elongation-at-break is not more than 36%.

WO01/02883 to Bacon (patent Reference 8) concerns provision of a novel removable retroreflective sheeting in which an adhesive layer, which is adjacent to a reflective layer in the retroreflective sheeting, contains an organofunctional coupling agent. However, according to the technology disclosed in this Reference, the reflective layer remains on the side of the glass microbeads when the sheeting is removed, to retain its retroreflectivity. Hence the sheeting can be reused when an adhesive layer is laminated anew, which is undesirable from the viewpoint of tamper-prevention.

Petra, et al. disclose in EP1225554A1 (Patent Reference 9) a tamper-indicating article for attachment to a surface of a substrate comprising (a) a retroreflective sheet and (b) an adhesive layer, wherein said retroreflective sheet comprises a reflective layer, a non-silicone-based release layer adjacent to said reflective layer, and a layer of lenses overlying said release layer and positioned in optical connection with said reflective layer, so as to produce retroreflection; and wherein the article exhibits an interlayer cohesive failure at the release layer of the retroreflective sheet when an attempt is made to remove the article from the substrate surface (cf. Claim 1).

In the Patent reference 9, Petra et al. shows as an example of preferred embodiment, a release layer (5) formed of a material selected from polyester resin, polyacrylate resin and their mixtures, but they do not disclose which polyester resin or polyacrylate resin excels in tamper-preventing effect. Their article, therefore, is not at all different from the retroreflective sheeting having two-layered focusing layer as described in the Fujino patent of Patent Reference 2.

Those polyester resins, polyacrylate resins and their mixtures named as examples in Petra, et al. contain polar groups such as ester groups in large quantities in their skeletal structures, and therefore have a defect that their adherability increases with time or thermal treatment, particularly to a specular reflective layer made of aluminum or the like.

Moreover, the site of interlayer failure is the interface of the reflective layer (6) and the release layer (5), and the focusing layer remains on the lens layer (glass beads). The surface layer peeled in such a form can regain retroreflectivity by, for example, application of aluminum paint or re-plating or vapor-depositing silver or aluminum thereon. Thus, the tamper-preventing effect of the article cannot be regarded complete.

Still in addition, the elongation-at-break of retroreflective sheet according to the above invention by Petra, et al. is substantially at least 40%, and only one specifically disclosed in Examples is 86% of a release layer formed of vinyl chloride resin. For the reasons earlier explained, such highly pliable resins, e.g., vinyl chloride resin and urethane resin, have a defect of relatively poor weatherability and durability, and the claimed articles are unsuitable for uses requiring durability, such as signs including traffic signs and construction signs; and number plates on vehicles including automobiles and motorcycles.

EP 1 666 925 A (Patent Reference 10) describes a retroreflective sheeting provided with a destructive layer, which comprises at least a surface layer, retroreflective element layer and adhesive layer, characterized in that at least one destructive layer is provided between the layers constituting the retroreflective sheeting, that the resin constituting said destructive layer is alicyclic polyolefin resin or alicyclic acrylic resin; and when the retroreflective sheeting which is once stuck on a substrate is peeled off from the substrate, that the peeling takes place at the interface of the destructive layer and the layer which is in intimate contact therewith and/or by destruction of the destructive layer.

JP 2000-298206 (Patent Reference 11) relates to the problem to easily peel process release paper by using a mixture composed of a non-curing type peeling agent and a curing type silicone peeling agent or a mixture composed of a curing type non-silicone peeling agent as an essential component in forming the peeling agent composition of a peeling agent layer. As solution to this problem, the reference describes that a composition of a peeling agent layer of the process release paper used for fixing by thermal affixation of glass beads is formed essentially of a mixture composed of the non-curing type peeling agent and the curing type silicone peeling agent or the curing type non-silicone peeling agent. In the case of the non-curing type peeling agent/the curing type silicone peeling agent, the weight ratio thereof ranges from 98 to 30/2 to 70. In the case of the non-curing type peeling agent/the curing type non-silicone peeling agent, the weight ratio thereof ranges from 98 to 65/2 to 35. As a result, the glass beads are securely thermally fixed onto the process release paper, the surfaces of the glass beads are coated with a synthetic resin, and two sides to the properties that the process release paper peels off easily from the glass beads at peeling of the process release paper in the ensuring stage are imparted to the process release paper.

### Disclosure of the Invention

Various certification stickers using the above retroreflective sheetings are finding increasing utility particularly as reflective stickers to be stuck on vehicles, because of their excellent visibility at night.

For example, on stickers which are called third plates, same vehicle registration numbers as those given on number plates of cars are printed. Such a third plate is stuck on the inner side of a vehicle window and is useful to prevent theft of the number plate mounted on outer side of the vehicle.

Use of the retroreflective sheeting for "validation" stickers certifying payment of auto tax, which also are stuck on the inner side of vehicle windows similarly to third plates, is also increasing.

Furthermore, also for utilities other than vehicles, retroreflective sheeting which has very complex structure is less easily available and more difficult of forgery compared to stickers made of ordinary paper or plastic sheet or stickers with hologram layer, and for this reason is often used for certification stickers or the like.

However, attempts to tamper certification stickers used for such purposes are occurring by peeling them off from the originally stuck places and putting tem to other usages, which poses serious problems.

An object of the present invention is to provide retroreflective sheeting which, while fully exhibiting its inherent excellent properties, can be used in certification stickers showing tamper-preventing effect or re-peeling-preventing effect, as the stickers clearly leave traces of their being peeled off, when they are peeled off from the sites on which they were once stuck.

Moreover, where a retroreflective certification sticker as above is mounted on, for example, a glass window of a vehicle or car body, even when it is provided with a tamper-preventing layer, there is a problem that the action of said layer tends to be deteriorated in long use, as it is exposed to sunlight and high temperature. The present invention aims at provision of retroreflective sheeting for use in tamper-preventing stickers which are resistant to such prolonged use under high temperatures and exhibit stable tamper-preventing effect.

For utilities requiring durability such as signs e.g., traffic signs or construction signs and number plates on vehicles e.g., automobiles or motorcycles, acrylic resin, alkyd resin, polyester resin and the like have been used with preference. Such resins of high durability relatively lack pliability, having elongation-at-break of not higher than 36%. The present invention can provide retroreflective sheeting made of resins having elongation-at-break of not higher than 36%, excelling in weatherability and durability and exhibiting tamper-preventing effect.

First, a retroreflective sheeting exhibiting tamper-preventing effect, which has a novel structure according to the first embodiment of the present invention, is explained.

An example of enclosed lens-type retroreflective sheeting structure useful for the present invention comprises a surface layer, a large number of micro glass beads, a holding layer to hold the glass beads, a specular reflective layer to reflect incident light, at least one layer of focusing layer which is provided between the glass beads and the reflective layer, and an adhesive layer. Where the sheeting is to be used as adhered to inside surface of glass or the like, the adhesive layer may be disposed on the surface layer.

As resins to constitute the surface layer (1) and holding layer (2), light-transmissive thermoplastic resins such as acrylic resin, methacrylic resin, polyethylene terephthalate resin and other polyester resin, butyral resin, vinyl chloride resin, urethane resin, alkyd resin, epoxy resin, polystyrene resin, vinyl ether resin, fluorine-containing resin and the like have been used with preference. Whereas, for usages requiring pliability such as safety goods like clothes and survival equipment, pliable resins whose sheeting shows an elongation-at-break of at least 40%, e.g., vinyl chloride resin, urethane resin and the like have been conveniently used, but they have a defect of relatively poor weatherability and durability.

Examples of the resin useful for the adhesive layer (7) in the retroreflective sheeting of the present invention include acrylic resin, methacrylic resin, alkyd resin, polyester resin, polyurethane resin, epoxy resin, silicon-derived resin, natural rubber, synthetic rubber and vinyl ether resin, while useful resins are not limited thereto. Of these, acrylic resin is particularly preferred.

Examples of the specular reflective layer useful for the retroreflective sheeting of the present invention include aluminum, silver, nickel and copper, while not limited thereto. Of these, aluminum is particularly preferred because of light sheeting appearance.

The retroreflective sheeting according to the present invention is an enclosed lens-type retroreflective sheeting comprising at least a large number of micro glass beads (3), a holding layer (2) made of a light-transmissive resin, which holds the glass beads (3), a specular reflective layer (6) to reflect incident light, and a focusing layer (4) which is composed of at least one layer of light-transmissive resin and is disposed between the glass beads (3) and the specular reflective layer (6), the sheeting being characterized by provision of an adhesive layer (7) under the specular reflective layer (6) of the retroreflective sheeting so that the sheeting is stuck on a substrate (8) by the adhesive layer (7), an attempt to peel the sheeting off from the substrate (8) causing interlayer peeling of the focusing layer (4) from the glass beads (3) and /or the holding layer (2), and /or destruction of the focusing layer (4), leading to damage or loss in the retroreflective performance, in which the resin constituting the focusing layer (4) is acrylic resin except for alicyclic acrylic resin, polyurethane resin, alkyd resin, butyral resin, polyester resin, or a mixture of two or more of these.

The thickness of the focusing layer (4a) can be suitably selected, which may range, for example, 0.1 - 30µm, preferably 0.1 - 10µm. When it is less than 0.1µm, its peeling becomes incomplete and is undesirable. Whereas, when it exceeds 30µm, retroreflective performance of the sheeting may deteriorate or peeling at the focusing layer may take place before it is stuck on a substrate or during its transportation or storage.

When two or more focusing layers are used, it is necessary to design the total thickness of the layers to be 20 - 40µm, according to the size of the micro glass beads used, in order to secure sufficient retroreflective performance. When the focusing layer (4) is made thick, e.g., to the total thickness exceeding 20µm, even one and same resin may be dividedly applied and dried to make the two or more layers (4a, 4b...). While depending also on viscosity of the resin solution to be applied or its applying conditions, the reduction in its applying amount per application reduces the risk of foaming and allows formation of the focusing layer more closely paralleling with the curvature of the micro glass beads, which is preferred for obtaining favorable luminance. The focusing layer (4a) is a focus-forming layer in contact with the glass beads (3) and /or the holding layer (2).

Method of forming each of the focusing layers can be any that is suitable for individual occasions, such as coating, printing, laminating or spraying method. In particular, when a focusing layer according to the present invention is to be partially installed, printing method is preferred.

The compound useful for the focusing layer of the pesent invention is a polymer or prepolymer of acrylic resin except for alicyclic acrylic resin, polyurethane resin, alkyd resin, butyral resin, polyester resin, or their mixtures.

Selection of specific resin is suitably made according to the intended mode of destruction.

Preferred alicyclic polyolefin resin for the present invention has an alicyclic structure in its main chain, examples of which are cyclopentane resin including cyclopentane resin (chemical formula 1a), bicyclopentane resin (chemical formula 1b) and cyclopentanorbornene resin (chemical formula 1c); and vinylcyclopentane resin including vinylcyclopentane resin (chemical formula 2a) and vinylcyclopentanorbornene resin (chemical formula 2b); or cyclohexadiene resin (chemical formula 3a) and cyclohexane resin (chemical formula 3b): 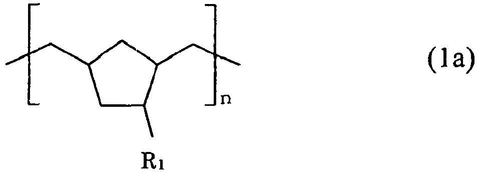 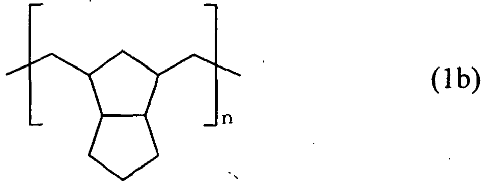 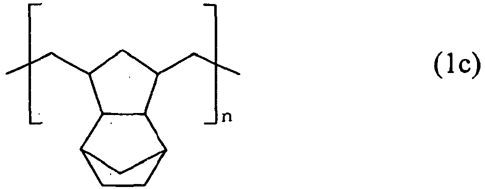 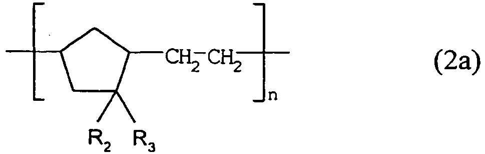 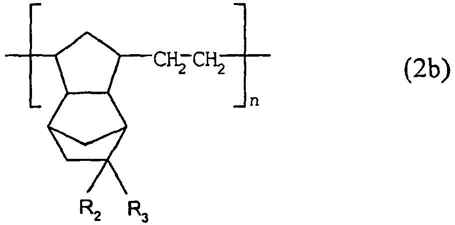 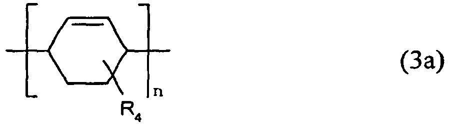 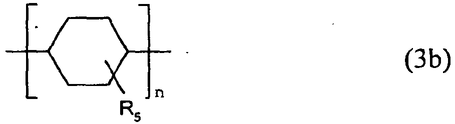 (in the formulae, R₁, R₂, R₃, R₄ and R₅ each selected from the group consisting of hydrogen, alkyl, cyano, cyclohexyl and alkoxycarbonyl, and n denotes number-average degree of polymerization).

The cyclopentane resin (chemical formula 1a) is normally obtained by the steps comprising ring-opening polymerization of cycloolefins such as norbornene, dicyclopentadiene or tetracyclododecene, using a metathesis catalyst composed of transition metal compound such as of tungsten, molybdenum and the like and alkyl aluminum; and saturating double bond in the resulting intermediate polymer by hydrogenation. As a commercial product, ZEONEX of Zeon Corporation can be used.

As the substituent R₁ in the above cyclopentane resin (chemical formula 1a), cyclohexyl is particularly preferred. The structure in which the substituent R is hydrogen, crystallinity tends to increase to reduce transparency. Where the substituent R₁ is cyclohexyl, an amorphous polymer can be formed with improved transparency, which is particularly preferred for use in the focusing layer (4a) of the present invention.

. Vinylcyclopentane resin (chemical formula 2a) and vinylcyclopentanorbornene resin (chemical formula 2b) are normally obtained by ring-opening polymerization of norbornene derivatives having ether groups in its side chains, , using a combination catalyst of tungsten-aluminum compound, and subsequent hydrogenation of the resultant intermediate compound to suturate its vinyl groups. Such compounds have ester group structure and tend to show relatively highly intimate adherability to other resin layers or reflective layer constituting the retroreflective sheeting. As a commercially available product, ARTON manufactured by JSR Co., Ltd. can be named.

As the substituents R₂ and R₃ in these vinylcyclopentane resin (chemical formula 2a) and vinylcyclopentanorbornene resin (chemical formula 2b), hydrogen (-H), methyl (-CH₃), cyano (-CN), methoxycarbonyl (-COOCH₃), butoxycarbonyl (-COOC₂H₅), cyclohexyloxycarbonyl (-COO(cyclo-C₆H₁₁ and n-butoxycarbonyl (-COO(n-C₄H₉)) are particularly preferred, for adjusting optical properties such as transparency and refractive index, heat resistance and intimate adherability to adjacent layers.

Particularly preferred cyclohexadiene resins (chemical formulae 3a and 3b) are 1,3-cyclohexadiene resin and cyclohexane resin. These cyclohexadiene polymers can be obtained by living anionic polymerization of 1,3-cyclohexadiene, using a catalyst composed of alkyl lithium and amine compound. In particular, 1,3-cyclohexadiene resin is preferred in respect of heat resistance.

Polyurethane resin, acrylic resin, butyral resin and polyester resin can be made more susceptible to cohesive failure by reducing their molecular weight, and can be used as a layer to cause cohesive failure. Or when two or more focusing layers are to be formed, they can be formed as a non-destructive and /or non-peeling layer.

Formation of such a non-destructive and /or non-peeling focusing layer from these resins is preferred for manufacture of the retroreflective sheeting with less expense and for preventing occurrence of peeling at the focusing layer before sticking the sheeting to substrate or during transportation or storage of the sheeting.

These resins useful for making the focusing layer (4) are preferably suitably adjusted of their molecular weight or crosslinking density, to allow easier peeling.

Adequate molecular weight ranges, as converted to molecular weight of styrene, 1, 000 - 100,000. Molecular weight of the focusing layer (4) which will induce interlayer separation from the glass beads (3) and /or the holding layer (2) lies within a range of 10,000 - 100,000, preferably 50,000- 100,000; and that of the focusing layer (4) whose destruction causes peeling of the sheeting lies within a range of 1,000 - 5,000, preferably 1,000 - 3,000. The molecular weight must be suitably adjusted according to individual molecular structure or method of polymerization.

It is also possible to adjust adhesive strength with adjacent layers of the focusing layer (4) or to reduce the cohesive force of the focusing layer (4) itself, by addition of other resin(s). As useful resin(s) for such addition, various cellulose compounds such as cellulose acetate butyrate; and various waxes such as aliphatic hydrocarbon wax, fatty acid ester wax, saturated aliphatic acid wax, saturated alcohol wax and metallic soap can be named. As examples of aliphatic hydrocarbon wax, polyethylene wax, polypropylene wax, microcrystalline wax, paraffin wax and fischertrops wax can be named. Examples of fatty acid ester wax include sazole wax, montanic acid ester wax, carnauba wax, rice wax, bees wax and candelilla wax. Examples of saturated aliphatic acid wax include stearic acid and montanic acid. Examples of saturated alcohol wax include stearin alcohol and behenyl alcohol. As examples of metallic soap, calcium stearate and zinc stearate can be named. These waxes can be added in an amount ranging from 1 - 100 parts by weight.

With the view to cause the destruction by easy peeling at the interface of the focusing layer (4) and its adjacent layer, silicon-derived resin or fluorine-containing resin may be used as mixed with other resin(s) used for making the focusing layer (4).

Preferably, ultraviolet absorber, antioxidant and light stabilizer are added to the focusing layer (4) to impart durability or weatherability.

Examples of ultraviolet absorber include benzophenone ultraviolet absorber, salicylate ultraviolet absorber and benzotriazole ultraviolet absorber. Examples of antioxidant include phosphorus antioxidant, sulfur antioxidant and phenol antioxidant. As examples of light stabilizer, hindered amine light stabilizer can be named.

The retroreflective sheeting of the present invention is an enclosed lens-type retroreflective sheeting at least comprising a large number of micro glass beads (3); a holding layer (2) made of light-transmissive resin, which holds the glass beads; a specular reflective layer (6) to reflect incident light; at least one layer of focusing layer (4) made of light-transmissive resin, which is disposed between the many glass beads (3) and the reflective layer (6); and an adhesive layer (7) provided under the specular reflective layer (6); said sheeting being stuck on a substrate (8) by the adhesive layer (7), characterized in that an attempt to peel off the retroreflective sheeting from the substrate (8) causes interlayer separation of the focusing layer (4) from the glass beads (3) and /or the holding layer and /or breakage of the focusing layer (4), to damage or destroy retroreflectivity of the sheeting, in which the resin constituting the focusing layer (4) is acrylic resin except for alicyclic acrylic resin, polyurethane resin, alkyd resin, butyral resin, polyester resin, or a mixture of two or more of these.

In an embodiment as illustrated in Fig.3 wherein the release layer (5), which is in contact with the specular reflective layer (6), is formed under the focusing layer (4), peeling takes place at the interface of the specular reflective layer (6) and the release layer (5) formed of an easily separable resin layer, the focusing layer (4) remains on the glass beads (3). When peeling takes such a form, retroreflectivity of the sheeting can be restored by, for example, applying aluminum paint onto the remaining focusing layer (4) or re-plating the layer (4) with silver or aluminum, or vapor-depositing silver or aluminum on the layer (4). Hence its tamper-preventing effect is insufficient.

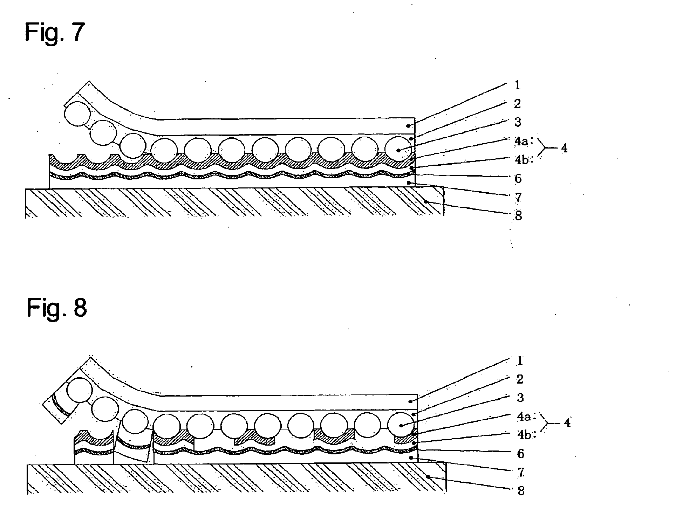

In order to further improve the tamper-preventing effect to perfection, it is important to secure contact of the focusing layer (4) with the glass beads (3) and their holding layer (2), as illustrated in Fig.7. When a tamper-indicating retroreflective sheeting of the invention having such a structure when it is peeled off from the substrate (8), either separation of the focusing layer (4) from the beads (3) takes place or the focusing layer (4) itself is broken. Hence, even if aluminum paint is applied to the remainder or silver or aluminum is re-plated or vapor-deposited thereon, retroreflectivity of the sheeting is scarcely restored and re-use of the article after peeling is difficult.

For imparting such tamper-preventing action after peeling, furthermore, the interlayer separation strength between the focusing layer (4) made of above-described resin(s) and the glass beads (3) and the holding layer (2) which are in contact with the focusing layer (4), and the strength of peeling caused by destruction of the focusing layer (4) must be designed to be less than that between any other layers constituting the sheeting, or that between the adhesive layer and the substrate, or the strength of peeling due to cohesive failure of any of those other layers.

Measurement of peeling strength is normally done by the method as specified by JIS Z-0237.

Generally in the art of reflective sheet, the adhesive (tackifier) to adhere a sheet to a substrate is given the least peeling strength which is, taking an aluminum substrate for example, 5-20 Newton/25mm (hereafter Newton is abbreviated as N).

When the focusing layer (4) used in the present invention is made of, for example. polyurethane resin, acrylic resin, alkyd resin, butyral resin, polyester resin or mixtures thereof, its peeling strength from the glass beads and/or the resin of holding layer (2) can be made less.

For interlayer separation strength of the focusing layer (4) according to the present invention from the glass beads (3) and /or the holding layer (2) or the peeling strength due to destruction of the focusing layer (4) is preferably designed to be 0.1 - 15 N/25mm.

When the strength is less than 0.1 N/25mm, destruction of the focusing layer (4) may take place before the sheeting is adhered to a substrate or deformation of the focusing layer (4) is apt to take place during transportation or storage of the sheeting, which are undesirable.

Where the peeling strength exceeds 15 N/25 mm, peeling of the focusing layer (4) is difficult but that between the adhesive layer and the substrate is caused, exhibiting no tamper-prevention effect.

Again, even when the peeling strength falls within the above-specified range, the intended peeling at the focusing layer is difficult, when the peeling strength of the layer (4) from the glass beads and their holding layer (2) or the peeling strength due to destruction of the layer (4) are only slightly less than the peeling strength between other layers constituting the sheeting or that between the adhesive layer and the substrate, or that due to cohesive failure of each of the other layers.

In order to facilitate the intended peeling, it is desirable that the peeling strength of the focusing layer (4) from the glass beads (3) and their holding layer (2) or the peeling strength due to destruction of the layer (4) are less than the peeling strength between other layers constituting the sheeting or that between the adhesive layer and the substrate, or that due to cohesive failure of each of the other layers, by at least 2 N/25 mm.

In the present invention, other than the interfacial peeling strength between the focusing layer (4) and the glass beads (3) and their holding layer (2), which are in contact with the layer (4), and the peeling strength due to destruction of the focusing layer (4), the peeling strength between the adhesive layer (7) and the substrate (8) is low. Therefore, it is desirable that either of the interfacial peeling strength between the focusing layer (4) and the glass beads (3) and their holding layer (2), or the peeling strength due to destruction of the focusing layer (4), is less than the peeling strength of the retroreflective sheeling from the substrate (8) by at least 2 N/25 mm.

The total light transmission of the focusing layer (4) in the retroreflective sheeting of the present invention is preferably 75 - 98%. When it is less than 75%, retroreflection efficiency of the sheeting undesirably decreases.

Those acrylic resin, polyurethane resin, alkyd resin, butyral resin or polyester resin which constitute the focucing layer (4) in the retroreflective sheeting of the present invention can be any of those which are put to ordinary optical usages, among which those of high transparency having a total light transmission of at least 75% are preferred.

Whereas, known acrylic resin or polyester resin are apt to cause such problems as high water absorption or high percentile dimensional change after moisture absorption. Such problems are particularly serious in the embodiments adopted in the present invention to prevent tampering by causing interlayer separation.

A focusing layer (4) made of a resin having high water absorption or percentile dimensional change shows large dimensional changes when it absorbs moisture during actual use. Such dimensional changes do not cause peeling trouble when the focusing layer is made of ordinary resin, but peeling strength of the focusing layer (4) according to the present invention is designed to be low, and the dimensional changes are liable to cause unintentional peeling.

The water absorption can be measured by the water absorption measuring method as specified by ASTM D570. For example, vinylcyclopentanorbornene resin useful for the present invention shows a water absorption of 0.3% after standing in 23°C water for a week, while ordinary acrylic resins show high water absorption of 2.3%.

Furthermore, percentile dimensional change after 10 days' treatment under the conditions of 60°C in temperature and 90% in relative humidity of vinylcyclopentanorbornene resin was as low as 0.02%, while that of acrylic resin was as high as 0.30%.

Likewise, silicon-derived resin shows a water absorption of 0.3% and percentile dimensional change after moisture absorption of 0.04%, both values being less than those of ordinary acrylic resin.

Fluorine-containing resin has a water absorption of 0.3% and percentile dimensional change after moisture absorption of 0.03%, which also are low as compaired with ordinary acrylic resin.

Water absorption and percentile dimensional change after moisture absorption of cellulose derivatives are similarly measured, to be 1.7% and 0.11%, respectively. While the water absorption is somewhat higher, the percentile dimensional change after moisture absorption is practically free of any problem.

Elongation-at-break of the retroreflective sheeting of the present invention is preferably not more than 36%, in particular, not more than 30%.

Conventionally, as resins to make the surface layer (1) and the holding layer (2), acrylic resin, polyester resin, butyral resin, vinyl chloride resin, polyurethane resin, alkyd resin and fluorine-containing resin are sued. Whereas, for the utilities requiring pliability, such as safety goods like clothing and life preservers, pliable or elastic resins having an elongation-at-break of 40% or more, e.g., vinyl chloride resin, urethane resin and the like are used, which however are subject to a defect of relatively poor weatherability and durability.

On the other hand, for such utilities requiring durability, as signs like traffic signs and construction signs and number plates for vehicles like automobiles and motorcycles, which are the main utilities for the present invention, acrylic resin, alkyd resin, polyester resin and the like are conveniently used as surface layers and holding layers, because of their high weatherability, durability and solvent resistance. Generally speaking, these resins lack pliability and have elongation-at-break values not more than 36%.

Therefore, it is most preferred that the resin constituting the focusing layer (4a) of the retroreflective sheeting of the present invention is alicyclic polyolefin resin, alicyclic acrylic resin or cellulose derivatives; and the resins constituting the focusing layer (4b), surface layer (1) or holding layer (2) are acrylic resin, alkyd resin, polyester resin or butyral resin.

Furthermore, as another embodiment, the present invention provides a retroreflective sheeting in which the focusing layer is formed of at least two layers, and at least one of the layers is partially in contact with the glass beads (3) and the holding layer (2). In such an embodiment, the focusing layer is formed of at least two layers, in which the focusing layer (4a) is preferably formed in continuous or partial contact with the glass beads (3) and holding layer (2), while forming independent regions. As above-explained, the focusing layer (4a) is designed to have a relatively small adhesive force to its adjacent layer, and when degradation is induced during a prolonged use by moisture infiltration between these layers, presence of the independent regions formed by the focusing layer (4a) shows a merit of rendering spreading of the degradation more difficult.

As a means for forming such independent regions, printing method is preferred for ease of the operation. Any of known printing methods such as screen printing, photogravure, flexo printing, offset printing, ink jet printing, thermal transfer printing or the like can be used. Screen printing, photogravure and flexo printing are particularly preferred because they can provide independent regions at the desired locations, either continuously or discontinuously.

For achieving the aforesaid merit, preferably the size of the independent regions forming the focusing layer (4a) ranges 25 - 400 mm², as an area on the retroreflective sheeting seen from above. When plural independent regions form letters or a pattern in combination, each of the formed letters or pattern can be considered as an areal unit.

As long as the size of the independent regions falls within the above-specified range, when water, solvent or the like infiltrate through the interface between the focusing layer and glass beads or that between the holding layer and reflective layer and/or into the focusing layer in such occasions as the retroreflective sheeting of the present invention is exposed to rain or dew, or contaminants are washed away with solvent, the infiltration stays within the independent region(s) of the focusing layer and does not spread over the whole of the retroreflective sheeting. Thus unintended peeling can be conveniently prevented.

It is also possible to provide the retroreflective sheeting of the present invention with a printed layer for information display or coloring. Such a printed layer can be provided on the surface of the retroreflective sheeting, while it is preferably placed between the surface layer and the holding layer, to protect the printed layer.

As a means for providing this printed layer, known printing methods such as screen printing, photogravure, flexo printing, offset printing, ink ject printing, thermal transfer printing, electrostatic printing and the like can be used. Using such a method, a printed layer can be provided at desired part or parts, either continuously or discontinuously. For easy formation of the printed layer, screen printing, photogravure and flexo printing are preferred.

Hereinafter a retroreflective sheeting having a novel structure according to the second embodiment of the present invention, which exhibits tampering preventing effect, is explained.

The embodiment of the invention takes a form of retrorflective sheeting as defined above comprising at least a large number of micro glass beads (3), a holding layer (2) made of light-transmissive resin for holding the glass beads (3), a specular reflective layer (6) for reflecting incident light, a light-transmissive focusing layer (4) which is disposed between the glass beads (3) and the specular reflective layer (6), and an adhesive layer (7) provided under the specular reflective layer (6), which retroreflective sheeting is stuck on a substrate (8) by the adhesive layer (7) and is characterized in that the focusing layer (4) consists of at least two focusing layers (4a, 4b ....), at least one of the focusing layers which is not in contact with the glass beads (3) and holding layer (2) is made of a silicon-containing compound, and when peeling the retroreflective sheeting from the substrate is attempted, either an interlayer peeling takes place between the silicon-containing compound-containing focusing layer and its adjacent layer and/or at least one silicon-containing compound-containing focusing layer breaks, and whereby the retroreflectivity is damaged or lost.

According to this embodiment of the invention, at least one of the focusing layers which is not in contact with the glass beads and the holding layer is a layer containing a silicon-containing compound.

As examples of silicon-containing compounds useful for the present invention, silicon-derived resins and silane compounds can be named.

As the silicon-derived resins, silicone resins and silicon-modified resins can be named.

Silicone resins useful for the present invention have inorganic siloxane bonds in their main chains and organic groups in their side chains. As the compound, modified or unmodified silicone resins such as dimethylsilicone, methylphenylsilicone, diphenylsilicone, methylhydrogensilicone, alkyl-modified silicone, polyether-modified silicone, fluorine-modified silicone, amino-modified silicone, epoxy-modified silicone, carboxyl-modified silicone and the like can be named.

Silicon-modified resins are those whose main chains are made of resins having silicon at their terminals or in their side chains, for example, those whose main chains are made of resins, having siloxane skeletal structure in their side chains, such as alkydsilicone varnish, epoxysilicone varnish, urethanesilicone varnish, acrylsilicone varnish, polyester-modified vanish and the like.

When such a silicon-derived resin or silicon-modified resin is used, the focusing layer(s) containing it comes to have a considerably lower interlayer peeling strength or breaking strength compared with non-breaking portions, rendering it possible to make the difference in strength between the breaking portion and non-breaking portion large. This is preferable for easy tamper indication.

When the interlayer peeling strength or breaking strength of the layer containing the silicon-derived resin or silicon-modified resin is too low, however, such drawbacks as that such interlayer peeling or breakage take place during transportation or processing of the retroreflective sheeting, for example, during stripping of the release paper for protecting the adhesive layer off the sheeting. For the purpose of preventing such troubles, it is also preferred to partially provide the layer susceptible to interlayer peeling or breakage.

As means for adjusting strength of the layer susceptible to interlayer peeling or breakage, a silicon-derived resin is mixed with other resin(s), namely acrylic resin except alicyclic acrylic resin, polyurethane resin, alkyd resin, butyral resin, polyester resin or the like, to prevent the interlayer peeling strength or breaking strength from becoming excessively low.

As the silane compounds useful as the silicon-containing compound in the present invention, silane coupling agents and silylating agents can be named.

As the silane coupling agents, for example, silane compounds such as vinyl silane, epoxy silane, styryl silane, methacryloxy silane, acryloxy silane, amino silane, ureido-silane, chloropropyl silane, mercapto silane, sulfide silane, isocyanate silane and the like can be named.

As the silylating agents useful in the present invention, for example, trimethylchlorosilane, 1,1,1,3,3,3-hexamethyldisilane, N,N'-bis(trimethyl)urea, 2,2,2-trifluoro-1-trimethylsiloxy-N-trimethylsilyl ethanimine, trimethylsilyltrifluoromethane sulfonate, triethyldimethylchlorosilane, t-butyldimethylchlorosilane, 1,3-dichloro-1,1,3,3-tetraisopropyldisiloxane and the like can be named.

When the silicon-containing compound contained in the layer is a silane compound, the interlayer peeling strength or the breaking strength can be made higher, compared with other non-breaking portions.

As the compounds to be mixed with the silane compound-containing layer according to the present invention, acrylic resin except alicyclic acrylic resin polyurethane resin, alkyd resin, butyral resin and polyester resin can be named. Of these, acrylic resin is preferred for easy mixing and good balance in the interlayer peeling strength or breaking strength.

A silane compound is inferior in drying property and productivity by itself, and hence it is preferably formed into a thin layer, to improve the drying property and productivity. It is also preferred to mix it with other compound(s) to improve its drying property.

In this embodiment, the compound constituting at least one of the focusing layers which is free of any silicon-derived compound is made of acrylic resin except alicyclic acrylic resin, polyurethane resin, alkyd resin, butyral resin, polyester resin, or a mixture of two or more of the foregoing, and that at least one of the focusing layers which is not in contact with the glass beads and the holding layer contains a silicon-containing compound.

In this embodiment, for example, a focusing layer (4a), which is in contact with the glass beads and holding layer and is not breakable and/or peelable, is made of an acrylic resin except alicyclic acrylic resin, and the second focusing layer (4b), which is partially provided in contact with the specular reflective layer, is made of a silicon-containing compound.

Furthermore, as another form of this second embodiment, for example, a focusing layer (4a) which is in contact with the glass beads and holding layer and is free of breakability and/or peelability, is made of an acrylic resin; as the second focusing layer (4b), a layer containing a silane compound is provided; and as the focusing layer (4c) which is in contact with the specular reflective layer, a layer made of a silicon-derived resin as mixed with, for example, norbornene resin as the other compound is partially provided in contact with the specular reflective layer.

In this embodiment, the specular reflective layer (6) is in partial contact with the focusing layer (4b) which contains a silane compound and has good intimate adherability, and also is in partial contact with the focusing layer (4c) which contains a silicon-derived resin and is easily peelable or breakable. This embodiment is advantageous in that the intimate adhesion of the specular reflective layer (6) to the focusing layers (4b, 4c) prevents such troubles as occurrence of interlayer peeling or breakage during transportation or handling of the retroreflective sheeting, e.g. in the occasion of stripping off the release paper which protects the adhesive at the bottom of the retroreflective sheeting, but when the retroreflective sheeting is peeled off from the substrate, interlayer peeling between the specular reflective layer (6) and the focusing layer (4c) or breakage of the focusing layer (4c) takes place to indicate tampering.

Again, in still other form of this second embodiment, for example, as a focusing layer (4a) which is in contact with the glass beads and holding layer, a layer free of breakability and/or peelability is made of an acrylic resin; as the second focusing layer (4b), a layer containing silicon-derived resin as mixed with, e.g., a norborne resin is partially provided; and as the focusing layer (4c) which is in contact with the specular reflective layer, a layer containing a silane compound is provided.

In the above embodiment, the interlayer peeling takes place between the acrylic resin layer (4a) and the silicon-derived resin/norbornene resin mixed layer (4b), or breakage of the layer (4b) takes place.

The parts of the above focusing layer where it is formed of, as seen from the glass beads side, an acrylic resin layer/silicon-derived resin-norbornene resin mixed layer/silane compound-containing layer, have low peeling or breaking strength. Whereas, the parts where the focusing layer is formed of, as seen from the glass beads side, an acrylic resin layer/silane-compound containing layer, have higher strength. This kind of construction is advantageous, because the retroreflective sheeting having this kind of focusing layer is free from such troubles as occurrence of interlayer peeling or breakage during its transportation or handling, e.g. in the occasion of stripping off the release paper which protects the adhesive at the bottom of the retroreflective sheeting, but when the retroreflective sheeting is peeled off from the substrate, the specular reflective layer (6) positioned under the silicon-derived resin-norbornene resin mixed layer (4b) breaks to indicate tampering.

### Brief explanation of drawings

Fig. 1 is a cross-sectional view to explain a known retroreflective sheeting having one layer of focusing layer.
Fig. 2 is a cross-sectional view to explain a known retroreflective sheeting having a double-layered focusing layer.
Fig. 3 is a cross-sectional view to explain a known retroreflective sheeting having one layer of focusing layer and a release layer.
Fig. 4 is a cross-sectional view to explain a preferred embodiment of a retroreflective sheeting in which a focusing layer (4) according to the present invention is provided.
Fig. 5 is a cross-sectional view to explain another preferred embodiment of a retroreflective sheeting in which another focusing layer (4) according to the present invention is provided.
Fig. 6 is a cross-sectional view to explain another preferred embodiment of a retroreflective sheeting in which a focusing layer (4a) according to the present invention is provided.
Fig. 7 is a cross-sectional view to explain another preferred embodiment of a retroreflective sheeting in which a focusing layer (4a) according to the present invention is provided.
Fig. 8 is a cross-sectional view to explain another preferred embodiment of a retroreflective sheeting in which a focusing layer (4a) according to the present invention is partially provided.
Fig. 9 is a plan view showing an example of providing continuously but partially the focusing layer (4a) of the present invention.
Fig. 10 is a plan view showing an example of providing the focusing layer (4a) of the present invention discontinuously, to let it form independent regions.
Fig. 11 is a cross-sectional view to explain another preferred embodiment of a retroreflective sheeting in which a focusing layer (4b) according to the present invention is provided.
Fig. 12 is a cross-sectional view to explain another preferred embodiment of a retroreflective sheeting in which a focusing layer (4b) according to the present invention is partially provided.
Fig. 13 is a cross-sectional view to explain another preferred embodiment of a retroreflective sheeting in which a focusing layer (4c) according to the present invention is provided.
Fig. 14 is a cross-sectional view to explain another preferred embodiment of a retroreflective sheeting in which a focusing layer (4c) according to the present invention is provided.
Fig. 15 is a cross-sectional view to explain another preferred embodiment of a retroreflective sheeting in which a focusing layer (4b,4c) according to the present invention are provided.
Fig. 16 is a cross-sectional view to explain another preferred embodiment of a retroreflective sheeting in which a focusing layer (4b) according to the present invention is provided.
Fig. 17 is a cross-sectional view to explain another preferred embodiment of a retroreflective sheeting in which a focusing layer (4b) is provided and, furthermore, a focusing layer (4c) is partially provided according to the present invention.
Fig. 18 is a cross-sectional view to explain another preferred embodiment of a retroreflective sheeting in which a focusing layer (4b) is partially provided and, furthermore, a focusing layer (4c) is provided according to the present invention.

### Reference numerals

1. surface layer
2. holding layer
3. glass beads
4. focusing layer
   4a. focusing layer
   4b. focusing layer
   4c. focusing layer
5. release layer
6. specular reflective layer
7. adhesive layer
8. substrate

### Embodiments for working the invention

Preferred embodiments of the present invention are explained, referring to the drawings.

Fig. 1 shows an example of structure of a known enclosed lens-type retroreflective sheeting.

Fig. 1 shows a known enclosed lens-type retroreflective sheeting, which comprises a surface layer (1), micro glass beads (3), a holding layer (2) to hold the glass beads, a specular reflective layer (6) to reflect incident light, one layer of focusing layer (4) which is formed between the glass beads and the specular reflective layer, and an adhesive layer (7) formed under the specular reflective layer (6). When peeling of this retroreflective sheeting off from a substrate (8) is attempted, it peels off between the adhesive layer (7) and the substrate (8).

Fig. 2 shows structure of a known enclosed lens-type retroreflective sheeting (cf. Patent Reference 2).

The known retroreflective sheeting as illustrated in Fig. 2 comprises a surface layer (1), micro glass beads (3), a holding layer (2) to hold the glass beads, a specular reflective layer (6) to reflect incident light, two focusing layers (4a and 4b) are formed between the glass beads and the specular reflective layer, and an adhesive layer (7). Peeling of this retroreflective sheeting takes place between the adhesive layer (7) and the substrate (8).

Fig. 3 shows the structure of the tamper indicating enclosed lens-type retroreflective sheeting which is disclosed in Patent Reference 9 by Petra, et al. and which is used for comparison with the present invention.

The sheeting comprises, from the top of Fig. 3, a surface layer (1), micro glass beads (3), a holding layer (2) for holding the glass beads, a specular reflective layer (6) to reflect incident light, a focusing layer (4) formed between the glass beads and the specular reflective layer, a release layer (5) and an adhesive layer (7) formed under the specular reflective layer (6). However, in this embodiment, the resin used for the focusing layer (4) and release layer (5) is acrylic resin or polyester resin, and the structure is in no way different from that of the retroreflective sheeting of Fig. 2. When it is peeled off, interlayer peeling takes place between the release layer (5) and the specular reflective layer (6).

Fig. 4 shows an embodiment of an enclosed lens-type retroreflective sheeting which is provided with a focusing layer (4) according to the present invention.

The sheeting comprises, from the top of Fig. 4, a surface layer (1) formed of light-transmissive, thermoplastic resin, micro glass beads (3), a holding layer (2) for holding the glass beads (3) which is formed of light-transmissive, thermoplastic resin, a specular reflective layer (6) to reflect incident light, at least one layer of a focusing layer (4) made of light-transmissive resin, which is provided between the glass beads (3) and the specular reflective layer (6), and an adhesive layer (7).

When peeling of this retroreflective sheeting off the substrated is attempted, either interlayer separation takes place between the focusing layer (4), which is in contact with the glass beads (3), and the glass beads (3) and/or the holding layer (2); or the focusing layer (4) breaks, to damage or destroy retroreflectivity of the sheeting.

Fig. 5 shows an embodiment of the retroreflective sheeting of the present invention. An attempt to peel this sheeting off a substrate results in cohesive failure of the focusing layer (4) itself, to damage or destroy retroreflectivity of the sheeting.

Fig. 5 shows an embodiment of the retroreflective sheeting of the present invention which comprises, from the top, a surface layer (1), micro glass beads (3), a holding layer (2) for holding the glass beads, a specular reflective layer (6) to reflect incident light, a focusing layer (4) formed of at least one layer provided between the glass beads and the specular reflective layer, and an adhesive layer (7), and which is peeled off by breakage of the focusing layer (4) itself.

Fig. 6 shows another embodiment of an enclosed lens-type retroreflective sheeting in which a focusing layer (4) according to the invention is provided.

In those embodiments as shown in Figs. 6 - 8, the retroreflective sheeting comprises a surface layer (1), micro glass beads (3), a holding layer (2) for holding the glass beads, a specular reflective layer (6) to reflect incident light, a two-layer focusing layer (4a, 4b) which is formed between the glass beads and the specular reflective layer, and an adhesive layer (7). In this embodiment, an attempt to peel it off results in interlayer peeling between the focusing layer (4a) and the glass beads (3) and/or the holding layer (2), or breakage of the focusing layer (4a).

Fig. 7 shows another embodiment of an enclosed lens-type retroreflective sheeting in which a focusing layer (4) according to the present invention is provided.

The retroreflective sheeting of Fig. 7 comprises, from the top, a surface layer (1), micro glass beads (3), a holding layer (2) for holding the glass beads, a specular reflective layer (6) to reflect incident light, a two-layer focusing layer (4a, 4b) which is formed between the glass beads (3) and the specular reflective layer (6), and an adhesive layer (7) formed under the specular reflective layer (6). The specular reflective layer (6)-contacting side of the focusing layer (4) is made of known acrylic resin or polyester resin and is in intimately adhered to the specular reflective layer (6). In this embodiment, therefore, when peeling force is exerted, the focusing layer (4a) peels from the glass beads to substantially destroy retroreflectivity of the sheeting. The two layers (4a) and (4b) may have substantially identical optical properties such as refractive index, light transmission and the like, or may have different optical properties.

Fig. 8 shows another embodiment of an enclosed lens-type retroreflective sheeting in which a focusing layer (4) according to the present invention is partially provided.

Referring to Fig. 8, the retroreflective sheeting comprises, from the top, a surface layer (1), micro glass beads (3), a holding layer (2) for holding the glass beads, and a specular reflective layer (6) to reflect incident light, and between the glass beads (3) and the specular reflective layer (6), a focusing layer (4a) is partially formed, under which a focusing layer (4b) is formed in contact with the specular reflective layer (6). Under the specular reflective layer (6), an adhesive layer (7) is provided.

The focusing layer (4b) in contact with the specular reflective layer (6) is made of heretofore known acrylic resin, polyester resin or the like and its adhesion to the specular reflective layer is good. According to this embodiment, therefore, when a peeling force is exerted on the sheeting, the focusing layer (4a) peels off from the glass beads (3) and holding layer (2) as indicated in Fig. 8 to seriously damage retroreflectivity of the sheeting. The two focusing layers (4a) and (4b) may have substantially the same optical properties or different optical properties.

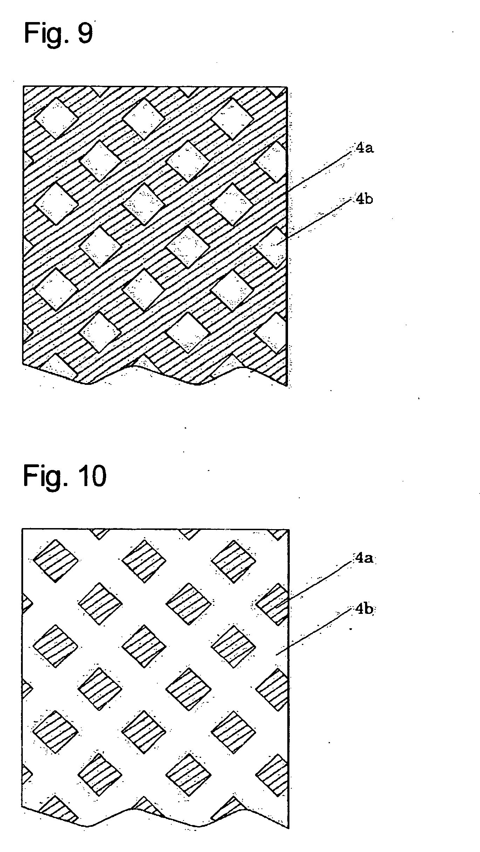

Fig. 9 shows an example wherein a focusing layer (4a) according to the present invention is continuously formed only on the parts filled with diagonal lines, that is, continuously but partially provided.

Fig. 10 shows an example wherein a focusing layer (4a) according to the present invention is partially provided not as a continuous layer but as discontinuous independent regions.

In order to cause such interlayer peeling between the focusing layer (4a) and the glass beads and/or the holding layer, or peeling by cohesive failure in the focusing layer (4a), or to facilitate the peeling, by partial provision of the focusing layer (4a) as in Fig. 9 or 10, suitable areal ratio of the focusing layer (4a) to the whole area of the sheeting is 20 - 90%, preferably 40 - 90%. The regions formed by the partial focusing layer (4a) may display certain information by letters or logos.

Fig. 10 illustrates an embodiment wherein the focusing layer (4a) is formed as mutually separate, independent regions. When the retroreflective sheeting is exposed to rain water or dew or when its soiling is washed away with a solvent, the water or solvent may infiltrate into interfaces between the focusing layer and glass beads, or between the holding layer and the reflective layer or/and into the focusing layer. Even when such a trouble occurs, according to this embodiment the infiltration of water or solvent is confined within a certain limited number of the independent regions of the focusing layer and does not spread over the entirety of the retroreflective sheeting. This embodiment thus can prevent occurrence of unintended whole peeling.

Fig. 11 shows another embodiment of retroreflective sheeting of the present invention, which has a structure wherein the focusing layer (4) consists of two layers (4a, 4b), one layer (4b) of which contains a silicon-containing compound.

Referring to Fig. 11, the sheeting is composed of, from the top, a surface layer (1), micro glass beads (3), a holding layer (2) for holding the glass beads, a specular reflective layer (6) to reflect incident light, a two-layer focusing layer (4a, 4b) which are formed between the glass beads and the specular reflective layer, and an adhesive layer (7) formed under the specular reflective layer (6). Through the adhesive layer (7) the retroreflective sheeting is stuck on a substrate (8).

As the focusing layer (4a), a layer which does not contain a silicon-containing compound can be used, and as the focusing layer (4b), a layer which contains a silicon-containing compound can be used.

While Fig. 11 shows an embodiment wherein peeling is taking place by interlayer peeling between a part (the left end in the figure) of the focusing layer (4b) and a part (the left end of the figure) of the specular reflective layer (6), the peeling may be designed to take place between the silicon-containing compound-free focusing layer (4a) and the focusing layer (4b) which contains a silicon-containing compound, or by breakage of the focusing layer (4b) which contains a silicon-containing compound.

In the embodiment of causing interlayer peeling between the focusing layer (4b) and the specular reflective layer (6), retroreflectivity of the peeled retroreflective sheeting could be restored by, for example, applying thereto aluminum paint or re-plating or vapor-depositing silver, aluminum or the like. Therefore, for preventing tampering, interlayer peeling between the focusing layer (4a) and focusing layer (4b) is preferred.

Fig. 12 shows still another embodiment of retroreflective sheeting of the present invention. It shows a structure in which the focusing layer (4) consists of two layers, one of which (4b) contains a silicon-containing compound and is partially provided.

From the top of Fig. 12, the sheeting comprises a surface layer (1), micro glass beads (3), a holding layer (2) for holding the glass beads, a specular reflective layer (6) to reflect incident light, a two-layer focusing layer (4a, 4b) which are formed between the glass beads and the specular reflective layer and an adhesive layer (7) formed under the specular reflective layer (6). Through the adhesive layer (7) the retroreflective sheeting is stuck on a substrate (8).

The focusing layer (4a) does not contain any silicon-containing compound, under which the layer (4b) containing a silicon-containing compound is partially provided.

In Fig. 12, peeling takes place by interlayer peeling between the focusing layer (4b) and the specular reflective layer (6), but the peeling can be designed to take place between the focusing layer (4a) not containing a silicon-containing compound and the focusing layer (4b) which contains a silicon-containing compound; or by breakage of (4b). In Fig. 12, the focusing layer (4a) is partially in contact with the specular reflective layer (6). The contacting parts are stronger than the parts at which the silicon-containing compound-containing focusing layer (4b) is in contact with the specular reflective layer (6). This embodiment is convenient in that it can prevent such troubles as occurrence of interlayer separation or layer breakage during transportation or handling of the retroreflective sheeting, e.g., when the release paper to protect the adhesive on the retroreflective sheeting is peeled off.

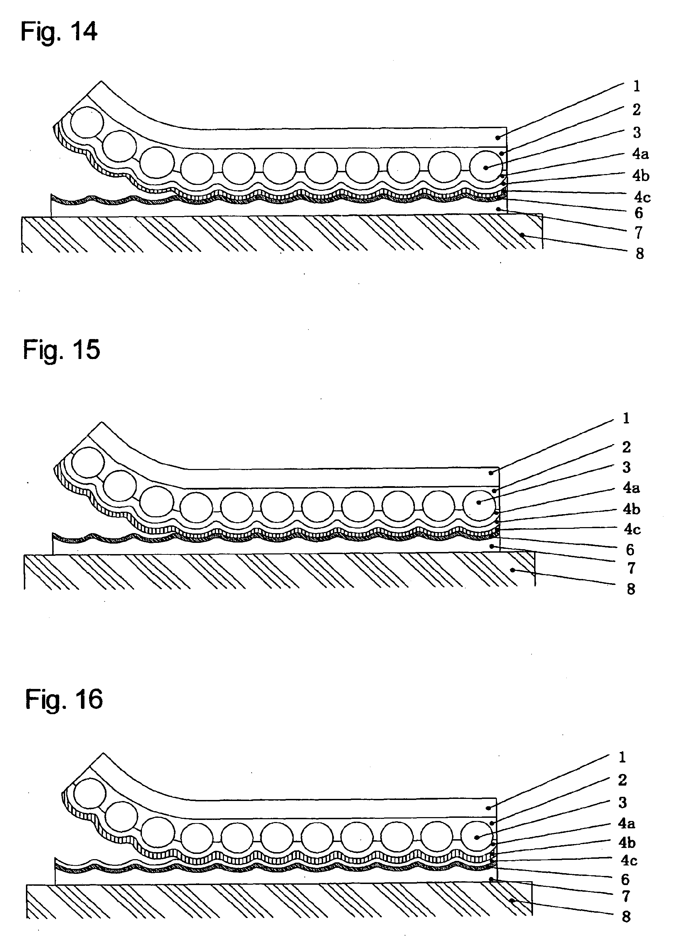

Figs. 13 and 14 show embodiments of retroreflective sheeting according to the present invention, in which the focusing layer (4) consists of three layers 4a, 4b and 4c among which the focusing layers (4a, 4b) do not contain silicon-containing compound, and the focusing layer (4c) which is in contact with the specular reflective layer (6) contains a silicon-containing compound.

Referring to Figs. 13 and 14, each of the sheetings is composed of, from the top, a surface layer (1), micro glass beads (3), a holding layer (2) for holding the glass beads, a specular reflective layer (6) to reflect incident light, a three-layer focusing layer (4a, 4b, 4c) which is formed between the glass beads and the specular reflective layer, and an adhesive layer (7) formed under the specular reflective layer (6). Through the adhesive layer (7) the retroreflective sheeting is stuck on a substrate (8).

The focusing layers (4a, 4b) do not contain any silicon-containing compound, and the focusing layer (4c) contains a silicon-containing compound.

In Fig. 13, peeling takes place between the focusing layer (4b) which is free of silicon-containing compound, and the focusing layer (4c) containing a silicon-containing compound. It may be so modified that the peeling will take place by an interlayer peeling between the focusing layer (4c) and the specular reflective layer (6), as shown in Fig. 14, or the focusing layer (4c) may be broken.

Fig. 15 shows a retroreflective sheeting of the present invention, in which the focusing layer (4) is composed of three layers, 4a, 4b and 4c. One of the layers, 4a, is free of silicon compound, and the other two layers 4b and 4c contain silicon-containing compound.

From the top of Fig. 15, the sheeting comprises a surface layer (1), micro glass beads (3), a holding layer (2) for holding the glass beads, a specular reflective layer (6) to reflect incident light, a three-layer focusing layer (4a, 4b, 4c) which is formed between the glass beads and the specular reflective layer, and an adhesive layer (7) formed under the specular reflective layer (6). Through the adhesive layer (7) the retroreflective sheeting is stuck on a substrate 8.

The focusing layer (4a) does not contain any silicon-containing compound, and the focusing layers (4b, 4c) contain a silicon-containing compound.

In the embodiment illustrated in Fig. 15, peeling takes place by interlayer peeling between the focusing layer (4c) and the specular reflective layer (6), but the peeling may take place between the focusing layer (4a) which is free of silicon-containing compound and the focusing layer (4b) which contains a silicon-containing compound, or between the two layers (4b, 4c) in the focusing layer; or at least one of these layers may be broken.

Fig. 16 shows a retroreflective sheeting of the present invention, in which the focusing layer (4) is three-layered. Two of the layers (4a, 4c) do not contain silicon-containing compound, and the focusing layer (4b) contains silicon-containing compound.

Referring to Fig. 16, the sheeting comprises, from the top, a surface layer (1), micro glass beads (3), a holding layer (2) for holding the glass beads, a specular reflective layer (6) to reflect incident light, a three-layer focusing layer (4a, 4b, 4c) which are formed between the glass beads (3) and the specular reflective layer (6) and an adhesive layer (7) formed under the specular reflective layer (6). Through the adhesive layer (7) the retroreflective sheeting is stuck on a substrate 8.

The focusing layers (4a, 4c) do not contain silicon-containing compound and the focusing layer (4b) contains silicon-containing compound.

In the embodiment illustrated in Fig. 16, peeling takes place due to interlayer peeling between the focusing layer (4b) and the focusing layer (4c), but the peeling can be designed to take place among the focusing layers (4a, 4c) which do not contain any silicon-containing compound, and the focusing layer (4b) which contains a silicon-containing compound; or by breakage of the focusing layer (4b).

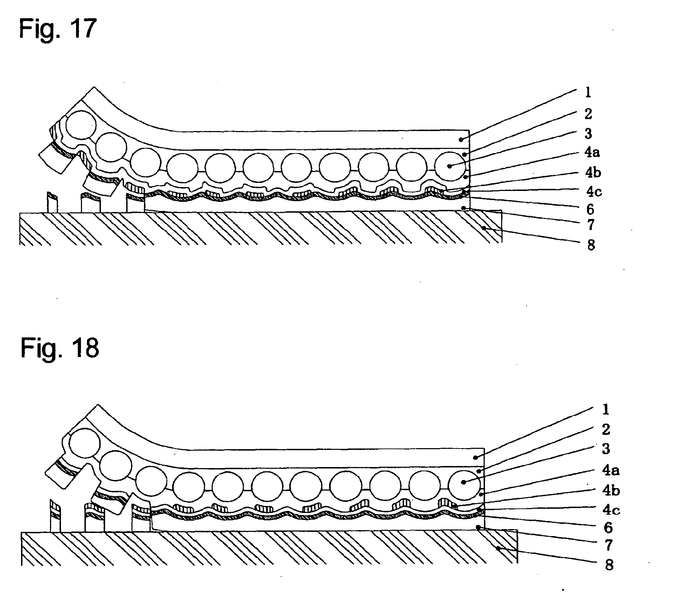

Fig. 17 further shows an embodiment of a retroreflective sheeting according to the present invention. In the illustrated structure focusing layer (4) consists of three layers, one layer (4a) of which does not contain any silicon-containing compound, the other focusing layers (4b, 4c) contain silicon-containing compound, and the focusing layer (4c) is partially provided.

Referring to Figs. 17 and 18, the sheeting is composed of, from the top, a surface layer (1), micro glass beads (3), a holding layer (2) for holding the glass beads, a specular reflective layer (6) to reflect incident light, a three-layer focusing layer (4a, 4b, 4c) which are formed between the glass beads and the specular reflective layer and an adhesive layer (7) formed under the specular reflective layer (6). Through the adhesive layer (7) the retroreflective sheeting is stuck on a substrate (8).

The focusing layer (4a) does not contain any silicon-containing compound, and focusing layers (4b, 4c) contain a silicon-containing compound.

In Fig. 17, peeling takes place between the focusing layer (4b) and a part of the specular reflective layer (6), but the peeling can be designed to take place between the focusing layer (4a) not containing a silicon-containing compound and the focusing layer (4c) which contains a silicon-containing compound, or between the focusing layer (4b) containing a silicon-containing compound and the focusing layer (4c) containing a silicon-containing compound; or by breakage of the silicon-containing compound-containing focusing layer (4b) or (4c).

In the embodiment of Fig. 17, between the silicon-containing compound-containing focusing layers (4b, 4c), (4c) contains a silane compound and (4b) contains silicone-containing resin. This is convenient in that the parts at which the focusing layer (4c) containing the silane compound and the specular reflective layer (6) are in mutual contact have higher strength than the parts at which the silicone-containing resin-containing focusing layer (4b) and the specular reflective layer (6) are in contact, whereby such troubles as occurrence of interlayer separation or layer breakage during transportation or handling of the retroreflective sheeting, e.g., when the release paper to protect the adhesive on the retroreflective sheeting is peeled off, can be prevented.

In the embodiment of Fig. 18, peeling takes place due to interlayer peeling between the focusing layer (4a) and a part of the focusing layer (4b), but the peeling can be designed to take place between the two layers (4b, 4c) each containing a silicon-containing compound; or by breakage of either of the silicon-containing compound-containing focusing layers (4b) or (4c).

In the embodiment of Fig. 18, between the silicon-containing compound-containing focusing layers (4b, 4c), (4b) contains a silicone-containing resin and (4c) contains a silane compound. This is convenient in that the parts at which the silicon-containing compound-free focusing layer (4a) and the silane compound-containing focusing layer (4c) are in mutual contact have higher strength than the parts at which the silicon-containing compound-free focusing layer (4a) and the silicone-containing resin-containing focusing layer (4b) are in contact, whereby such troubles as occurrence of interlayer separation or layer breakage during transportation or handling of the retroreflective sheeting, e.g., when the release paper to protect the adhesive on the retroreflective sheeting is peeled off, can be prevented.

### Examples

Hereinafter the present invention is explained still more specifically, referring to working examples.

Performance of retroreflective sheetings according to the present invention were evaluated by the following test methods.

### 1) Peeling strength

As the substrate to which sample retroreflective sheetings were adhered, a 2 mm-thick aluminum plate was used. Release paper for protecting the adhesive layer of each retroreflective sheeting to be tested was peeled off and sheeting was stuck on the substrate with a 2 kg-roller, following JIS Z-0237, and left standing under the conditions of temperature, 23°C, and relative humidity, 60% for 3 days. Peeling strength (N/25 mm) of each test piece was then measured as follows. Using a tensile tester, one end of the stuck reflective sheeting was pulled in the direction perpendicular to the aluminum plate at an angle of 90°, at a rate of 300 mm/min. The measurement was repeated 3 times and the average value was recorded as the peeling strength (N/25 mm).

### 2) Peeled state

The site of peeling off and the peeled state of those test pieces after the above test were visually observed, and the appearance was evaluated according to the following standard;

### Evaluation standard: peeled state (Examples 1-15)

A1:Peeled off between focusing layer (4a) and glass beads (3) and/or their holding layer (2)
A2: Peeled off by cohesive failure within focusing layer (4a)
B : Partially peeled off between focusing layer (4a) and glass beads (3) and/or their holding layer (2)
C: Peeled off by breakage of reflective sheeting, or by peeling between other layers

The site of peeling off and the peeled state of those test pieces after the above test were visually observed, and the appearance was evaluated according to the following standard;

### Evaluation standard: peeled state (Examples 16 - 32)

A1: Peeled off between focusing layer (4a) and glass beads (3) and/or their holding layer (2)
A2: Peeled off by cohesive failure within focusing layer (4a)
A3: Peeled off by cohesive failure within focusing layer (4b)
A4: Peeled off by cohesive failure within focusing layer (4c)
B : Partially peeled off between focusing layer (4a) and glass beads (3) and/or their holding layer (2)
C: Peeled off between focusing layer (4a) and focusing layer (4b)
D: Peeled off between focusing layer (4b) and focusing layer (4c)
E: Peeled off between focusing layer (4b) and specular reflective layer
F: Peeled off between focusing layer (4c) and specular reflective layer
G: Peeled off by breakage of retroreflective sheeting, or by peeling between other layers

### 3) Retroreflective performance test

Test pieces of each 100 mm x 100 mm size each were measured of their retroreflection performance with a retroreflection performance tester, "Model 920" manufactured by Advanced Retro Technology Co. The measurement was made 5 times following JIS Z-9117, at an angular conditions of observation angle of 0.2° and entrance angle of 5°, and the average value was recorded as the retroreflection performance (cd/1x/m²).

### 4) Elongation-at-break

The test was given following the tensile strength test method as prescribed by ASTM D638. The retroreflective sheeting to be tested was pulled with a tensile tester at a rate of 500 mm/min. until it was broken, and the average value of the test repeated 5 times per sample was recorded as the elongation-at-break (%).

### 5) Accelerated heat resistance test

The test pieces as stuck on the aluminum plate, as used in the peeling test, were given a heat-treatment in a hot air dryer whose temperature was controlled to 80°C, for 20 days. Thereafter the peeling test was given and their peeled state was evaluated according to the following standard.

### Evaluation standard: peeled state

A1: Peeled off between focusing layer (4a) and glass beads (3) and/or their holding layer (2)
A2: Peeled off by cohesive failure within focusing layer (4a)
B : Partially peeled off between focusing layer (4a) and glass beads (3) and/or their holding layer (2)
C: Peeled off by breakage of reflective sheeting, or by peeling between other layers

### 6) Release paper peeling test (Examples 15 - 32)

The retroreflective sheetings to be tested were given a heat treatment in a hot air dryer whose temperature was controlled to 80°C, for 20 days, and thereafter their release paper peeling test was conducted by peeling off their release paper for protecting the adhesive layers on the sheetings, by pulling the paper with a tensile tester in the direction of 180° to the retroreflective sheeting, at a rate of 300 mm/min. Each peeled state was evaluated according to the following standard.

The measurement was made under the conditions of: temperature, 23°C and relative humidity, 60%.

### Evaluation standard: peeled state

A1: Peeled off between focusing layer (4a) and glass beads (3) and/or their holding layer (2)
A2: Peeled off by cohesive failure within focusing layer (4a)
A3: Peeled off by cohesive failure within focusing layer (4b)
A4: Peeled off by cohesive failure within focusing layer (4c)
B : Partially peeled off between focusing layer (4a) and glass beads (3) and/or their holding layer (2)
C: Peeled of between focusing layer (4a) and focusing layer (4b)
D: Peeled of between focusing layer (4b) and focusing layer (4c)
E: Peeled off between focusing layer (4b) and specular reflective layer
F: Peeled off between focusing layer (4c) and specular reflective layer
G: Peeled off by breakage of retroreflective sheeting, or by peeling between other layers
H: Peeled between the adhesive layer and release paper

Concerning characteristics of the resins which were used for preparation of retroreflective sheetings, they were evaluated by the following test methods.

### 7) Glass transition temperature

Glass transition temperature (°C) was measured following the DSC method as prescribed by JIS K-7121, under temperature elevation condition of 20°C/min.

### 8) Water absorption

Water absorption (%) was determined by keeping each of the resin samples in 23°C water for a week and measuring its weight change, following ASTM D570.

### 9) Dimensional change rate after moisture absorption

Test pieces prepared from the resins were kept under the conditions of 60°C temperature and 90% relative humidity for 10 days, and their dimensions were measured to determine dimensional change rate.

### 10) Total light transmission

The test pieces of 1.0 mm in thickness were used for measuring their total light transmission (%) following ASTM D1003.

### Example 1 (for comparison)

On 75 µm-thick, transparent polyethylene telephthalate film manufactured by Teijin Ltd. (tradename: TEIJIN TETRON FILM S-75) which was used as the carrier film, a surface layer (1) having a thickness of 18 µm after drying was formed (cf. Fig. 4) by applying a liquid blend prepared by adding to 100 wt parts of an acrylic resin solution made by Nippon Carbide Industries Co., Inc. (tradename: NISSETSU RS-1200) and 14 wt parts of a methylated melamine resin solution having formaldehyde substitution number of 6, made by Sanwa Chemical Co. (tradename: NIKALAC MS-11), 21.1 wt parts of methyl isobutyl ketone and 5.3 wt parts of toluene were added as solvents and mixing them by agitation, and drying the same. The acrylic resin solution, NISSETSU RS-1200, was prepared by dissolving an ethyl acrylate/methyl methacrylate/2-hydroxyethyl methacrylate (weight ratio: 65/21/14) copolymer having a weight-average molecular weight of about 250,000 in a solvent mixture of ethyl acetate/toluene/methyl isobutyl ketone at a blend ratio of 7/45/48 and adjusting the non-volatile component content to 40%.

Further on the surface layer (1), a holding layer (2) having a thickness of 27 µm after drying was formed, by applying a liquid blend prepared by adding to 100 wt parts of an acrylic resin solution made by Nippon Carbide Industries Co., Inc. (tradename: NISSETSU RS-3000) and 12 wt parts of a biuret type hexamethylene diisocyanate crosslinking agent made by Sumika Bayer Urethane Co., Ltd. (tradename: SUMIDUR N-75), 22.6 wt parts of methyl isobutyl ketone and 9.7 wt parts of toluene as solvents and mixing them by agitation, and drying the same. The acrylic resin solution, NISSETSU RS-3000, was prepared by dissolving an ethyl acrylate/methyl methacrylate/2-hydroxyethyl methacrylate (weight ratio: 65/21/14) copolymer having a weight-average molecular weight of about 120,000 in a 50:50 solvent mixture of toluene and methyl isobutyl ketone and adjusting the non-volatile component content to 43%.

In this holding layer (2) micro glass beads (3) having a refractive index of 2.20 and an average particle diameter of about 65 µm, made by Kabushiki Kaisha Union (tradename: UNIBEADS U-45NHAC) were embedded by 50 - 80% of the micro glass beads' diameter.

Then on the micro glass beads (3)-embedded surface, a toluene solution having a non-volatile component content of 20 wt% of vinylcyclopentanorbornene resin made by JSR Kabushiki Kaisha (tradename: ARTON FX4727), which has the properties as shown in later appearing Table 1 was applied with a coater, and dried to provide a focusing layer (4) having an average dry thickness of 21 µm. This average thickness was determined as follows: before applying the resin solution for forming the focusing layer onto the above laminate, it was applied onto a polyethylene terephthalate film (Teijin Ltd., TEIJIN TETRON FILM S-75) under the same conditions for forming the focusing layer and dried, its thickness was measured at 5 different spots with a dial gauge, and the average value of which was recorded as the average thickness of the focusing layer.

On the surface of this focusing layer (4) aluminum of purity not lower than 99.99% was deposited by vacuum evaporation method to provide a 0.1 µm-thick specular reflective layer (6), thus making an intermediate product 1.

Separately, an adhesive sheet 1 was prepared by applying onto a release paper made by LINTEC Corporation (tradename: E2P-L-PE(P)), an adhesive composition which was obtained by stirring and mixing 100 wt parts of an acrylic tackifier made by Nippon Carbide Industries Co., Inc. (tradename: NISSETSU KP-1818) composed of a butyl acrylate/acrylic acid (98/2) copolymer and rosin-derived tackifier, with 0.76 wt part of a chelate crosslinking agent made by Nippon Carbide Industries Co., Inc. (tradename: NISSETSU CK-401) and drying the same. The adhesive layer after the drying had a thickness of 40 µm.

The adhesive layer (7) on the adhesive sheet 1 was stuck on the vapor-deposited aluminum surface of the intermediate product 1, and the release paper on which the adhesive layer (7) was laminated was removed. Thus exposed adhesive surface was stuck on a substrate (8), and the 75 µm-thick transparent polyethylene terephthalate film made by Teijin Ltd. (tradename: TEIJIN TETRON FILM S-75), which was used as the process film, was peeled off. Thus a retroreflective sheeting of Example 1 of the present invention having a cross-sectional structure as illustrated in Fig. 4 was obtained.

Thus obtained retroreflective sheeting was measured of its peeling strength, state of peeling, retroreflective performance and elongation-at-break, and subjected to an accelerated heat resistance test.

Its peeling took place between the focusing layer (4a) and glass beads (3) and/or between the focusing layer (4a) and the holding layer (2), and the peeling strength was 0.2 N/25 mm.

The retroreflective performance was 95 cd/1x/m², which is satisfactory for the purpose of the present invention.

The elongation-at-break was 26%, which is satisfactory for the purpose of the present invention.

In the accelerated heat resistance test, peeling took place between the focusing layer (4a) and glass beads (3) and/or between the focusing layer (4a) and holding layer (2).

As above, the retroreflective sheeting as obtained in Example 1 of the present invention had an adequate peeling strength, and the peeling took place between the focusing layer (4a) and glass beads (3) and/or between the focusing layer (4a) and holding layer (2). It was satisfactory for the purpose of the present invention.

### Example 2 (for comparison)

A liquid blend was prepared by adding to 100 wt parts of an acrylic resin solution made by Nippon Carbide Industries Co., Inc. (tradename: NISSETSU RS-1200) and 14 wt parts of a methylated melamine resin solution made by Sanwa Chemical Co. (tradename: NIKALAC MS-11), 21.1 wt parts of methyl isobutyl ketone and 5.3 wt parts of toluene as solvents, and mixing them by agitation. The blend was applied onto a 75 µm-thick, transparent polyethylene terephthalate film made by TEIJIN Ltd. (tradename: TEIJIN TETRON FILM S-75) which was used as the carrier film, and dried to form the surface layer (1) having a dry thickness of 18 µm (cf. Fig. 6).

Further on the above surface layer a liquid blend formed by mixing and stirring, with 100 wt parts of an acrylic resin solution made by Nippon Carbide Industries Co., Inc. (tradename: NISSETSU RS-3000) and 12 wt parts of an isocyanate crosslinking agent made by SUMIKA Bayer Urethane Co. (tradename: SUMIDUR N-75), 22.6 wt parts of methyl isobutyl ketone and 9.7 wt parts of toluene as solvents, was applied and dried, to provide a holding layer (2) having a thickness after drying of 27 µm.

In this holding layer (2) micro glass beads (3) having a refractive index of 2.20 and an average particle diameter of about 65 µm, made by Kabushiki Kaisha Union (tradename: UNIBEADS U-45NHAC) were embedded by 50 - 80% of the micro glass beads' diameter.

Then on the micro glass beads (3)-embedded surface, a 10 wt% toluene solution of vinylcyclopentanorbornene resin made by JSR Kabushiki Kaisha (tradename: ARTON FX4727) which has the properties as shown in later appearing Table 1 was applied twice, and dried to provide a focusing layer (4) having a combined average dry thickness of the two layers of 21 µm, the holding layer-side focusing layer (4a) having an average thickness of 11 µm after the drying and the specular reflective layer-side focusing layer (4b) having an average thickness of 10 µm after the drying.

On the surface of the focusing layer (4) aluminum of purity not lower than 99.99% was deposited by vacuum evaporation method to provide a 0.1 µm-thick specular reflective layer, thus making an intermediate product 2.

The adhesive layer (7) on the adhesive sheet 1 was stuck on the vapor-deposited aluminum surface of the intermediate product 2, and the release paper on which the adhesive layer (7) was laminated was removed. Thus exposed adhesive surface was stuck on a substrate (8), and the 75 µm-thick transparent polyethylene terephthalate film made by Teijin Ltd. (tradename: TEIJIN TETRON FILM S-75), which was used as the process film, was peeled off. Thus a retroreflective sheeting of Example 2 of the present invention having a cross-sectional structure as illustrated in Fig. 6 was obtained.

Thus obtained retroreflective sheeting was measured of its peeling strength, state of peeling, retroreflective performance and elongation-at-break, and subjected to an accelerated heat resistance test.

Its peeling took place between the focusing layer (4a) and glass beads (3) and/or between the focusing layer (4a) and the holding layer (2), and the peeling strength was 0.4 N/25 mm.

The retroreflective performance was 93 cd/1x/m², which is satisfactory for the purpose of the present invention.

The elongation-at-break was 27%, which is satisfactory for the purpose of the present invention.

In the accelerated heat resistance test, peeling took place between the focusing layer (4a) and glass beads (3) and/or between the focusing layer (4a) and holding layer (2).

As above, the retroreflective sheeting as obtained in Example 2 of the present invention had an adequate peeling strength, and the peeling took place between the focusing layer (4a), and glass beads (3) and/or between the focusing layer (4a) and holding layer (2). It was satisfactory for the purpose of the present invention.

### Example 3

A liquid blend was prepared by adding to 100 wt parts of an acrylic resin solution made by Nippon Carbide Industries Co., Inc. (tradename: NISSETSU RS-1200) and 14 wt parts of a methylated melamine resin solution made by Sanwa Chemical Co. (tradename: NIKALAC MS-11), 21.1 wt parts of methyl isobutyl ketone and 5.3 wt parts of toluene as solvents, and mixing them by agitation. The blend was applied onto a 75 µm-thick, transparent polyethylene terephthalate film made by TEIJIN Ltd. (tradename: TEIJIN TETRON FILM S-75) which was used as the process film with a coater, and dried to form the surface layer (1) having a dry thickness of 18 µm (cf. Fig. 7).

Further on the above surface layer (1) a liquid blend formed by mixing and stirring, with 100 wt parts of an acrylic resin solution made by Nippon Carbide Industries Co., Inc. (tradename: NISSETSU RS-3000) and 12 wt parts of an isocyanate crosslinking agent made by SUMIKA Bayer Urethane Co. (tradename: SUMIDUR N-75), 22.6 wt parts of methyl isobutyl ketone and 9.7 wt parts of toluene as solvents, was applied and dried, to provide a holding layer (2) having a thickness after the drying of 27 µm.

In this holding layer (2) micro glass beads (3) having a refractive index of 2.20 and an average particle diameter of about 65 µm, made by Kabushiki Kaisha Union (tradename: UNIBEADS U-45NHAC) were embedded by 50 - 80% of the micro glass beads' diameter.

Then on the micro glass beads (3)-embedded surface, a 10 wt% toluene solution of vinylcyclopentanorbornene resin made by JSR Kabushiki Kaisha (tradename: ARTON FX4727) which has the properties as shown in later appearing Table 1 was applied, and dried to provide a focusing layer (4a) having an average dry thickness of 5 µm.

A liquid blend was prepared by adding to 100 wt parts of an acrylic resin solution made by Nippon Carbide Industries Co., Inc. (tradename: NISSETSU RS-5000), which was composed of a butyl acrylate/methyl methacrylate/acrylic acid copolymer having a weight-average molecular weight of about 250,000, as diluled with a solvent mixture of toluene/xylene/ethyl acetate/butanol at a ratio of 13/49/28/10, to a non-volatile component content of 30%, and 5.5 wt parts of a methylated melamine resin solution made by Sanwa Chemical Co. (tradename: NIKLAC MS-11), 7.1 wt parts of methyl isobutyl ketone and 10.7 wt parts of toluene as solvents; and mixing them by agitation. This liquid blend was applied on the focusing layer (4a) and dried to form a focusing layer (4b) having an average dry thickness of 16 µm.

On the surface of the focusing layer (4b) aluminum of purity not lower than 99.99% was deposited by vacuum evaporation method to provide a 0.1 µm-thick specular reflective layer, thus making an intermediate product 3.

The adhesive layer (7) on the adhesive sheet 1 was stuck on the vapor-deposited aluminum surface of the intermediate product 3, and the release paper on which the adhesive layer (7) was laminated was removed. Thus exposed adhesive surface was stuck on a substrate (8), and the 75 µm-thick transparent polyethylene terephthalate film made by Teijin Ltd. (tradename: TEIJIN TETRON FILM S-75), which was used as the process film, was peeled off. Thus a retroreflective sheeting of Example 3 of the present invention having a cross-sectional structure as illustrated in Fig. 7 was obtained.

Thus obtained retroreflective sheeting was measured of its peeling strength, state of peeling, retroreflective performance and elongation-at-break, and subjected to an accelerated heat resistance test.

Its peeling took place between the focusing layer (4a) and glass beads (3) and/or between the focusing layer (4a) and the holding layer (2), and the peeling strength was 1.0 N/25 mm.

The retroreflective performance was 94 cd/1x/m², which is satisfactory for the purpose of the present invention.

The elongation-at-break was 29%, which is satisfactory for the purpose of the present invention.

In the accelerated heat resistance test, peeling took place between the focusing layer (4a) and glass beads (3) and/or between the focusing layer (4a) and holding layer (2).

As above, the retroreflective sheeting as obtained in Example 3 of the present invention had an adequate peeling strength, and the peeling took place between the focusing layer (4a), and glass beads (3) and/or between the focusing layer (4a) and holding layer (2). It was satisfactory for the purpose of the present invention.

### Example 4

A liquid blend was prepared by adding to 100 wt parts of an acrylic resin solution made by Nippon Carbide Industries Co., Inc. (tradename: NISSETSU RS-1200) and 14 wt parts of a methylated melamine resin solution made by Sanwa Chemical Co. (tradename: NIKALAC MS-11), 21.1 wt parts of methyl isobutyl ketone and 5.3 wt parts of toluene as solvents, and mixing them by agitation. The blend was applied onto a 75 µm-thick, transparent polyethylene terephthalate film made by TEIJIN Ltd. (tradename: TEIJIN TETRON FILM S-75) which was used as the carrier film, and dried to form the surface layer (1) having a dry thickness of 18 µm (cf. Fig. 8).

Further on the above surface layer a liquid blend formed by mixing and stirring, with 100 wt parts of an acrylic resin solution made by Nippon Carbide Industries Co., Inc. (tradename: NISSETSU RS-3000) and 12 wt parts of an isocyanate crosslinking agent made by SUMIKA Bayer Urethane Co. (tradename: SUMIDUR N-75), 22.6 wt parts of methyl isobutyl ketone and 9.7 wt parts of toluene as solvents, was applied and dried, to provide a holding layer (2) having a thickness after the drying of 27 µm.

In this holding layer (2) micro glass beads (3) having a refractive index of 2.20 and an average particle diameter of about 65 µm, made by Kabushiki Kaisha Union (tradename: UNIBEADS U-45NHAC) were embedded by 50 - 80% of the micro glass beads' diameter.

Then on the micro glass beads (3)-embedded surface, a 10 wt% toluene solution of vinylcyclopentanorbornene resin made by JSR Kabushiki Kaisha (tradename: ARTON FX4727) which has the properties as shown in later appearing Table 1 was applied by gravure printing method and dried to partially provide a focusing layer (4a) having an average dry thickness of 5 µm. The gravure roll used was such that gravure printing with the roll on the polyethylene terephthalate film (TEIJIN TETRON FILM S-75 made by Teijin Ltd.) was 5 µm in thickness, 25 mm² in the area of independent region, and the areal ratio between the printed part and non-printed part was 50:50.

A liquid-blend was prepared by adding to 100 wt parts of an acrylic resin solution made by Nippon Carbide Industries Co., Inc. (tradename: NISSETSU RS-5000) and 5.5 wt parts of a methylated melamine resin solution made by Sanwa Chemical Co. (tradename: NIKLAC MS-11), 7.1 wt parts of methyl isobutyl ketone and 10.7 wt parts of toluene as solvents; and mixing them by agitation. This liquid blend was applied as a focusing layer (4b) and dried, to form a two-layer focusing layer having a combined average thickness after the drying of 21 µm

On the surface of this second focusing layer, aluminum of purity not lower than 99.99% was deposited by vacuum evaporation method to provide a 0.1 µm-thick specular reflective layer (6), thus making an intermediate product 4.

The adhesive layer (7) on the adhesive sheet 1 was stuck on the vapor-deposited aluminum surface of the intermediate product 4, and the release paper on which the adhesive layer (7) was laminated was removed. Thus exposed adhesive surface was stuck on a substrate (8), and the 75 µm-thick transparent polyethylene terephthalate film made by Teijin Ltd. (tradename: TEIJIN TETRON FILM S-75), which was used as the carrier film, was peeled off. Thus a retroreflective sheet of Example 4 of the present invention having a cross-sectional structure as illustrated in Fig. 8 was obtained.

Thus obtained retroreflective sheeting was measured of its peeling strength, state of peeling, retroreflective performance and elongation-at-break, and subjected to an accelerated heat resistance test.

Its peeling took place between the focusing layer (4a) and glass beads (3) and/or between the focusing layer (4a) and the holding layer (2), and the peeling strength was 1.1 N/25 mm.

The retroreflective performance was 89 cd/1x/m², which is satisfactory for the purpose of the present invention.

The elongation-at-break was 29%, which is satisfactory for the purpose of the present invention.

In the accelerated heat resistance test, peeling took place between the focusing layer (4a) and glass beads (3) and/or between the focusing layer (4) and holding layer (2).

As above, the retroreflective sheeting as obtained in Example 4 of the present invention had a small peeling strength, and the peeling took place between the focusing layer (4a), and glass beads (3) and/or between the focusing layer (4a) and holding layer (2). It was satisfactory for the purpose of the present invention.

### Example 5

Example 3 was repeated except that an alicyclic acrylic resin made by Hitachi Chemical (tradename: OPTOREZ OZ1000) having the properties as shown in later appearing Table 1 was used as the resin for constituting the focusing layer (4a), in the form of a 15 wt% toluene solution, to make a retroreflective sheeting of Example 5 of the present invention having a cross-sectional structure as illustrated in Fig. 7. This resin has a structure of tricyclodecyl methacrylate/methyl methacrylate copolymer.

Thus obtained retroreflective sheeting was measured of its peeling strength, state of peeling, retroreflective performance and elongation-at-break, and subjected to an accelerated heat resistance test.

Its peeling took place between the focusing layer (4a) and glass beads (3) and/or between the focusing layer (4a) and the holding layer (2), and the peeling strength was 1.4 N/25 mm.

The retroreflective performance was 90 cd/1x/m², which is satisfactory for the purpose of the present invention.

The elongation-at-break was 28%, which is satisfactory for the purpose of the present invention.

In the accelerated heat resistance test, partial peeling took place between the focusing layer (4a) and glass beads (3) and/or between the focusing layer (4a) and holding layer (2).

As above, the retroreflective sheeting as obtained in Example 5 of the present invention had a small peeling strength, and the peeling took place between the focusing layer (4a) and glass beads (3) and/or between the focusing layer (4a) and holding layer (2). It was satisfactory for the purpose of the present invention.

### Example 6

As the surface layer, a 38 µm-thick, transparent polyethylene telephthalate film manufactured by Teijin Ltd. (tradename: TEIJIN TETRON FILM SEW-38) was used, and on which a holding layer (2) having a thickness of 27 µm after drying was formed (see Fig. 7), by applying a liquid blend prepared by adding to 100 wt parts of an acrylic resin solution made by Nippon Carbide Industries Co., Inc. (tradename: NISSETSU RS-3000) and 12 wt parts of an isocyanate crosslinking agent made by Sumika Bayer Urethane Co., Ltd. (tradename: SUMIDUR N-75), 22.6 wt parts of methyl isobutyl ketone and 9.7 wt parts of toluene as solvents and mixing them by agitation, and drying the same.

In this holding layer (2) micro glass beads (3) having a refractive index of 2.20 and an average particle diameter of about 65 µm, made by Kabushiki Kaisha Union (tradename: UNIBEADS U-45NHAC) were embedded by 50 - 80% of the micro glass beads' diameter.

Then on the micro glass beads (3)-embedded surface, a 10 wt% toluene solution of vinylcyclopentanorbornene resin made by JSR Kabushiki Kaisha (tradename: ARTON FX4727) which has the properties as shown in later appearing Table 1 was applied and dried to provide a focusing layer (4a) having an average dry thickness of 5 µm.

Then a liquid blend, which was prepared by adding to 100 wt parts of an acrylic resin solution made by Nippon Carbide Industries Co., Inc. (tradename: NISSETSU RS-5000) and 5.5 wt parts of a methylated melamine resin solution made by Sanwa Chemical Co. (tradename: NIKALAC MS-11), 7.1 wt parts of methyl isobutyl ketone and 10.7 wt parts of toluene as solvents and mixing them by agitation, was applied and dried to provide a focusing layer (4b) having an average thickness of 16 µm after the drying. The combined average dry thickness of the two layer-focusing layer was 21 µm.

On the surface of this focusing layer (4b), aluminum of purity not lower than 99.99% was deposited by vacuum evaporation method to provide a 0.1 µm-thick specular reflective layer, thus making an intermediate product 6.

Adhesive tape 1 was stuck on the surface of the aluminum specular reflective layer, to provide a retroreflective sheeting of Example 6 of the present invention, having a cross-sectional structure as shown in Fig. 7.

Thus obtained retroreflective sheeting was measured of its peeling strength, state of peeling, retroreflective performance and elongation-at-break, and subjected to an accelerated heat resistance test.

Its peeling took place between the focusing layer (4a) and glass beads (3) and/or between the focusing layer (4a) and the holding layer (2), and the peeling strength was 1.2 N/25 mm.

The retroreflective performance was 92 cd/1x/m², which is satisfactory for the purpose of the present invention.

The elongation-at-break was as much as 93%, but intended state of peeling was obtained, and is satisfactory for the purpose of the present invention.

In the accelerated heat resistance test, peeling took place between the focusing layer (4a) and glass beads (3) and/or between the focusing layer (4a) and holding layer (2).

As above, the retroreflective sheeting as obtained in Example 6 of the present invention had a small peeling strength, and the peeling took place between the focusing layer (4a) and glass beads (3) and/or the focusing layer (4a) and holding layer (2). It was satisfactory for the purpose of the present invention.

### Example 7

On 75 µm-thick, transparent polyethylene telephthalate film manufactured by Teijin Ltd. (tradename: TEIJIN TETRON FILM S-75) which was used as the process film, a surface layer (1) having a thickness of 18 µm after drying was formed (cf. Fig. 7) by applying a liquid blend prepared by adding to 100 wt parts of a polyester resin solution made by Mitsui Chemicals, Inc. (tradename: ORESTAR Q-203) and 11.6 wt parts of a methylated melamine resin solution made by Sanwa Chemical Co. (tradename: NIKALAC MS-11), 33.8 wt parts of methyl isobutyl ketone and 14.5 wt parts of toluene as solvents and mixing them by agitation, and drying the same (cf. Fig. 7).

Further on the surface layer (1), a holding layer (2) having a thickness of 27 µm after drying was formed by applying a liquid blend prepared by adding to 100 wt parts of an acrylic resin solution made by Nippon Carbide Industries Co., Inc. (tradename: NISSETSU RS-3000) and 12 wt parts of an isocyanate crosslinking agent made by Sumika Bayer Urethane Co., Ltd. (tradename: SUMIDUR N-75), 22.6 wt parts of methyl isobutyl ketone and 9.7 wt parts of toluene as solvents and mixing them by agitation, and drying the same.

In this holding layer (2) micro glass beads (3) having a refractive index of 2.20 and an average particle diameter of about 65 µm, made by Kabushiki Kaisha Union (tradename: UNIBEADS U-45NHAC) were embedded by 50 - 80% of the micro glass beads' diameter.

Then on the micro glass beads (3)-embedded surface, a 10 wt% toluene solution of vinylcyclopentanorbornene resin made by JSR Kabushiki Kaisha (tradename: ARTON FX4727) which has the properties as shown in later appearing Table 1 was applied and dried to provide a focusing layer (4a) having an average dry thickness of 5 µm.

Then a liquid blend 1, which was prepared by adding to 100 wt parts of an acrylic resin solution made by Nippon Carbide Industries Co., Inc. (tradename: NISSETSU RS-5000) and 5.5 wt parts of a methylated melamine resin solution made by Sanwa Chemical Co. (tradename: NIKALAC MS-11), 7.1 wt parts of methyl isobutyl ketone and 10.7 wt parts of toluene as solvents and mixing them by agitation, was applied and dried to provide a focusing layer (4b) having an average thickness of 16 µm after the drying. The combined average dry thickness of the two layer-focusing layer was 21 µm.

On the surface of this focusing layer (4b) aluminum of purity not lower than 99.99% was deposited by vacuum evaporation method to provide a 0.1 µm-thick specular reflective layer, thus making an intermediate product 7.

The adhesive layer (7) on the adhesive sheet 1 was stuck on the vapor-deposited aluminum surface of the intermediate product 7, and the release paper on which the adhesive layer (7) was laminated was removed. Thus exposed adhesive surface was stuck on a substrate (8), and the 75 µm-thick transparent polyethylene terephthalate film made by Teijin Ltd. (tradename: TEIJIN TETRON FILM S-75), which was used as the process film, was peeled off. Thus a retroreflective sheet of Example 7 of the present invention having a cross-sectional structure as illustrated in Fig. 7 was obtained.

Thus obtained retroreflective sheeting was measured of its peeling strength, state of peeling, retroreflective performance and elongation-at-break, and subjected to an accelerated heat resistance test.

Its peeling took place between the focusing layer (4a) and glass beads (3) and/or between the focusing layer (4a) and the holding layer (2), and the peeling strength was 1.1N/25 mm.

The retroreflective performance was 91 cd/1x/m², which is satisfactory for the purpose of the present invention.

The elongation-at-break was 36%, which is satisfactory for the purpose of the present invention.

In the accelerated heat resistance test, peeling took place between the focusing layer (4a) and glass beads (3) and/or between the focusing layer (4a) and holding layer (2).

As above, the retroreflective sheeting as obtained in Example 7 of the present invention had an adequate peeling strength, and the peeling took place between the focusing layer (4) and glass beads (3) and/or between the focusing layer (4) and holding layer (2). It was satisfactory for the purpose of the present invention.

### Example 8

A liquid blend was prepared by adding to 100 wt parts of an acrylic resin solution made by Nippon Carbide Industries Co., Inc. (tradename: NISSETSU RS-1200) and 14 wt parts of a methylated melamine resin solution made by Sanwa Chemical Co. (tradename: NIKALAC MS-11), 21.1 wt parts of methyl isobutyl ketone and 5.3 wt parts of toluene as solvents, and mixing them by agitation. The blend was applied onto a 75 µm-thick, transparent polyethylene terephthalate film made by TEIJIN Ltd. (tradename: TEIJIN TETRON FILM S-75), which was used as the carrier film, and dried to form the surface layer (1) having a dry thickness of 18 µm (cf. Fig. 7).

Further on the above surface layer a liquid blend formed by mixing and stirring, with 100 wt parts of an acrylic resin solution made by Nippon Carbide Industries Co., Inc. (tradename: NISSETSU RS-3000) and 12 wt parts of an isocyanate crosslinking agent made by SUMIKA Bayer Urethane Co. (tradename: SUMIDUR N-75), 22.6 wt parts of methyl isobutyl ketone and 9.7 wt parts of toluene as the solvent, was applied and dried, to provide a holding layer (2) having a thickness of 27 µm after the drying.

In this holding layer (2) micro glass beads (3) having a refractive index of 2.20 and an average particle diameter of about 65 µm, made by Kabushiki Kaisha Union (tradename: UNIBEADS

U-45NHAC) were embedded by 50 - 80% of the micro glass beads' diameter.

Then on the micro glass beads (3)-embedded surface, a 10 wt% toluene solution of vinylcyclopentanorbornene resin made by JSR Kabushiki Kaisha (tradename: ARTON FX4727) which has the properties as shown in later appearing Table 1 was applied, and dried to provide a focusing layer (4a) having an average dry thickness of 5 µm.

A liquid blend was prepared by adding to 100 wt parts of a polyester resin solution made by Mitsui Chemicals Co. (tradename: ORESTAR Q203) and 11.6 wt parts of a methylated melamine resin solution made by Sanwa Chemical Co. (tradename: NIKLAC MS-11), 33.8 wt parts of methyl isobutyl ketone and 14.5 wt parts of toluene as solvents, and mixing them by agitation. This liquid blend was applied and dried to form a focusing layer (4b) having an average dry thickness of 16 µm. After the drying, the total average thickness of the two layer-focusing layer was 21 µm.

On the surface of this focusing layer (4b) aluminum of purity not lower than 99.99% was deposited by vacuum evaporation method to provide a 0.1 µm-thick specular reflective layer (6), thus making an intermediate product 8.

The adhesive layer (7) on the adhesive sheet 1 was stuck on the vapor-deposited aluminum surface of the intermediate product 8, and the release paper on which the adhesive layer (7) was laminated was removed. Thus exposed adhesive surface was stuck on a substrate (8), and the 75 µm-thick transparent polyethylene terephthalate film made by Teijin Ltd. (tradename: TEIJIN TETRON FILM S-75), which was used as the carrier film, was peeled off. Thus a retroreflective sheeting of Example 8 of the present invention having a cross-sectional structure as illustrated in Fig. 7 was obtained.

Thus obtained retroreflective sheeting was measured of its peeling strength, state of peeling, retroreflective performance and elongation-at-break, and subjected to an accelerated heat resistance test.

Its peeling took place between the focusing layer (4a) and glass beads (3) and/or between the focusing layer (4a) and the holding layer (2), and the peeling strength was 1.4 N/25 mm.

The retroreflective performance was 85 cd/1x/m², which is satisfactory for the purpose of the present invention.

The elongation-at-break was 33%, which is satisfactory for the purpose of the present invention.

In the accelerated heat resistance test, peeling took place between the focusing layer (4a) and glass beads (3) and/or between the focusing layer (4a) and holding layer (2).

As above, the retroreflective sheeting as obtained in Example 8 of the present invention had an adequate peeling strength, and the peeling took place between the focusing layer (4a) and glass beads (3) and/or between the focusing layer (4a) and holding layer (2). It was satisfactory for the purpose of the present invention.

### Example 9

A liquid blend was prepared by adding to 100 wt parts of an acrylic resin solution made by Nippon Carbide Industries Co., Inc. (tradename: NISSETSU RS-1200) and 14 wt parts of a methylated melamine resin solution made by Sanwa Chemical Co. (tradename: NIKALAC MS-11), 21.1 wt parts of methyl isobutyl ketone and 5.3 wt parts of toluene as solvents, and mixing them by agitation. The blend was applied onto a 75 µm-thick, transparent polyethylene terephthalate film made by TEIJIN Ltd. (tradename: TEIJIN TETRON FILM S-75) which was used as the process film, and dried to form the surface layer (1) having a dry thickness of 18 µm (cf. of Fig. 7).

Further on the above surface layer, letters of 7 mm in height were gravure printed with a printing ink which was formed by mixing by stirring 100 wt parts of vinyl chloride/vinyl acetate-derived resin made by Dainippon Ink & Chemical Industries, Ltd. (tradename: VC MEDIUM S) with 6.5 wt parts of a coloring agent which was a mixture of said VC MEDIUM S with carbon black, made by Dainippon Inc & Chemical Industries, Ltd. (tradename: VC SUMI), and dried. Thus an about 1 µm-thick printed layer was provided.

On the surface layer with above printed layer provided thereon, a liquid blend formed by mixing and stirring, with 100 wt parts of an acrylic resin solution made by Nippon Carbide Industries Co., Inc. (tradename: NISSETSU RS-3000) and 12 wt parts of an isocyanate crosslinking agent made by SUMIKA Bayer Urethane Co. (tradename: SUMIDUR N-75), 22.6 wt parts of methyl isobutyl ketone and 9.7 wt parts of toluene as solvents, was applied and dried, to provide a holding layer (2) having a thickness of 27 µm after the drying.

In this holding layer (2) micro glass beads (3) having a refractive index of 2.20 and an average particle diameter of about 65 µm, made by Kabushiki Kaisha Union (tradename: UNIBEADS U-45NHAC) were embedded by 50 - 80% of the micro glass beads' diameter.

Then on the micro glass beads (3)-embedded surface, a 10 wt% toluene solution of vinylcyclopentanorbornene resin made by JSR Kabushiki Kaisha (tradename: ARTON FX4727) which has the properties as shown in later appearing Table 1 was applied, and dried to provide a focusing layer (4a) having an average dry thickness of 5 µm.

A liquid blend was prepared by adding to 100 wt parts of an acrylic resin solution made by Nippon Carbide Industries Co., Inc. (tradename: NISSETSU RS-5000) and 5.5 wt parts of a methylated melamine resin solution made by Sanwa Chemical Co. (tradename: NIKLAC MS-11), 7.1 wt parts of methyl isobutyl ketone and 10.7 wt parts of toluene as solvents; and mixing them by agitation. This liquid blend was applied and dried to form a focusing layer (4b) having an average dry thickness of 16 µm. After the drying, the total average thickness of the two layers was 21 µm.

On the surface of this focusing layer (4b) aluminum of purity not lower than 99.99% was deposited by vacuum evaporation method to provide a 0.1 µm-thick specular reflective layer, thus making an intermediate product 9.

The adhesive layer (7) on the adhesive sheet 1 was stuck on the vapor-deposited aluminum surface of the intermediate product 9, and the release paper on which the adhesive layer (7) was laminated was removed. Thus exposed adhesive surface was stuck on a substrate (8), and the 75 µm-thick transparent polyethylene terephthalate film made by Teijin Ltd. (tradename: TEIJIN TETRON FILM S-75), which was used as the process film, was peeled off. Thus a retroreflective sheet of Example 9 of the present invention having a cross-sectional structure as illustrated in Fig. 7 was obtained.

Thus obtained retroreflective sheeting was measured of its peeling strength, state of peeling, retroreflective performance and elongation-at-break, and subjected to an accelerated heat resistance test.

Its peeling took place between the focusing layer (4a) and glass beads (3) and/or between the focusing layer (4a) and the holding layer (2), and the peeling strength was 1.2 N/25 mm.

The retroreflective performance was 94 cd/1x/m², which is satisfactory for the purpose of the present invention.

The elongation-at-break was 28%, which is satisfactory for the purpose of the present invention.

In the accelerated heat resistance test, peeling took place between the focusing layer (4a) and glass beads (3) and/or between the focusing layer (4a) and holding layer (2).

As above, the retroreflective sheeting as obtained in Example 9 of the present invention had an adequate peeling strength, and the peeling took place between the focusing layer (4a) and glass beads (3) and/or between the focusing layer (4a) and holding layer (2). It was satisfactory for the purpose of the present invention.

### Example 10

A liquid blend was prepared by adding to 100 wt parts of an acrylic resin solution made by Nippon Carbide Industries Co., Inc. (tradename: NISSETSU RS-1200) and 14 wt parts of a methylated melamine resin solution made by Sanwa Chemical Co. (tradename: NIKALAC MS-11), 21.1 wt parts of methyl isobutyl ketone and 5.3 wt parts of toluene as solvents, and mixing them by agitation. The blend was applied onto a 75 µm-thick, transparent polyethylene terephthalate film made by TEIJIN Ltd. (tradename: TEIJIN TETRON FILM S-75) which was used as the process film, and dried to form the surface layer (1) having a dry thickness of 18 µm (cf. Fig. 7).

Further on the above surface layer (1) a liquid blend formed by mixing and stirring, with 100 wt parts of an acrylic resin solution made by Nippon Carbide Industries Co., Inc. (tradename: NISSETSU RS-3000) and 12 wt parts of an isocyanate crosslinking agent made by SUMIKA Bayer Urethane Co. (tradename: SUMIDUR N-75), 22.6 wt parts of methyl isobutyl ketone and 9.7 wt parts of toluene as solvents, was applied with a coater and dried, to provide a holding layer (2) having a thickness after drying of 27 µm.

In this holding layer (2) micro glass beads (3) having a refractive index of 2.20 and an average particle diameter of about 65 µm, made by Kabushiki Kaisha Union (tradename: UNIBEADS U-45NHAC) were embedded by 50 - 80% of the micro glass beads' diameter.

Then on the micro glass beads (3)-embedded surface, a 10 wt% toluene solution of vinylcyclopentanorbornene resin made by JSR Kabushiki Kaisha (tradename: ARTON FX4727) which has the properties as shown in later appearing Table 1 was applied and dried to provide a focusing layer (4a) having an average dry thickness of 5 µm.

A butyral resin powder made by Sekisui Chemical Co., Ltd. (tradename: S-LEC B BH-6) was diluted with 1:1 ethanol/toluene mixed solvent to form a butyral resin solution having a solid content of 10 wt%. A liquid blend was then prepared by mixing and stirring 100 wt parts of this solution with 1.8 wt parts of a methylated melamine resin solution made by Sanwa Chemical Co. (tradename: NIKALAC MS-11). The resulting liquid blend was applied and dried to provide a focusing layer (4b) having an average dry thickness of 16 µm. The total of the average thickness of the two layers after the drying was 21 µm.

On the surface of this focusing layer (4b), aluminum of a purity not lower than 99.99% was deposited by vacuum evaporation method to provide a 0.1 µm-thick specular reflective layer, thus making an intermediate product 10.

The adhesive layer (7) on the adhesive sheet 1 was stuck on the vapor-deposited aluminum surface of the intermediate product 10, and the release paper on which the adhesive layer (7) was laminated was removed. Thus exposed adhesive surface was stuck on a substrate (8), and the 75 µm-thick transparent polyethylene terephthalate film made by Teijin Ltd. (tradename: TEIJIN TETRON FILM S-75), which was used as the carrier film, was peeled off. Thus a retroreflective sheet of Example 10 of the present invention having a cross-sectional structure as illustrated in Fig. 7 was obtained.

Thus obtained retroreflective sheeting was measured of its peeling strength, state of peeling, retroreflective performance and elongation-at-break, and subjected to an accelerated heat resistance test.

Its peeling strength was 1.0 N/25 mm, and the peeling took place between the focusing layer (4a) and glass beads (3) and/or between the focusing layer (4a) and the holding layer (2).

The retroreflective performance was 92 cd/1x/m², which is satisfactory for the purpose of the present invention.

The elongation-at-break was 28%, which is satisfactory for the purpose of the present invention.

In the accelerated heat resistance test, peeling took place between the focusing layer (4b) and glass beads (3) and/or between the focusing layer (4b) and holding layer (2).

As above, the retroreflective sheeting as obtained in Example 10 of the present invention had an adequate peeling strength, and the peeling took place between the focusing layer (4b) and glass beads (3) and/or between the focusing layer (4b) and holding layer (2). It was satisfactory for the purpose of the present invention.

### Example 11

A liquid blend was prepared by adding to 100 wt parts of an acrylic resin solution made by Nippon Carbide Industries Co., Inc. (tradename: NISSETSU RS-1200) and 14 wt parts of a methylated melamine resin solution made by Sanwa Chemical Co. (tradename: NIKALAC MS-11), 21.1 wt parts of methyl isobutyl ketone and 5.3 wt parts of toluene as solvents, and mixing them by agitation. The blend was applied onto a 75 µm-thick, transparent polyethylene terephthalate film made by TEIJIN Ltd. (tradename: TEIJIN TETRON FILM S-75) which was used as the carrier film, and dried to form the surface layer (1) having a dry thickness of 18 µm.

Further on the above surface layer a liquid blend formed by mixing and stirring, with 100 wt parts of an acrylic resin solution made by Nippon Carbide Industries Co., Inc. (tradename: NISSETSU RS-3000) and 12 wt parts of an isocyanate crosslinking agent made by SUMIKA Bayer Urethane Co. (tradename: SUMIDUR N-75), 22.6 wt parts of methyl isobutyl ketone and 9.7 wt parts of toluene as the solvent, was applied and dried, to provide a holding layer (2) having a thickness after drying of 27 µm.

In this holding layer (2) micro glass beads (3) having a refractive index of 2.20 and an average particle diameter of about 65 µm, made by Kabushiki Kaisha Union (tradename: UNIBEADS U-45NHAC) were embedded by 50 - 80% of the micro glass beads' diameter.

Then on the micro glass beads (3)-embedded surface, a 10 wt% toluene solution of vinylcyclopentanorbornene resin made by JSR Kabushiki Kaisha (tradename: ARTON FX4727) which has the properties as shown in later appearing Table 1 was applied and dried to provide a focusing layer (4a) having an average dry thickness of 3 µm.

A butyral resin powder made by Sekisui Chemical Co., Ltd. (tradename: S-LEC B BH-6) was diluted with 1:1 ethanol/toluene mixed solvent to form a butyral resin solution having a solid content of 10 wt%. A liquid blend was then prepared by mixing and stirring 100 wt parts of this solution with 1.8 wt parts of a methylated melamine resin solution made by Sanwa Chemical Co. (tradename: NIKALAC MS-11). The resulting liquid blend was applied and dried to provide a focusing layer (4b) having an average dry thickness of 8 µm.

A liquid-blend was prepared by adding to 100 wt parts of an acrylic resin solution made by Nippon Carbide Industries Co., Inc. (tradename: NISSETSU RS-5000) and 5.5 wt parts of a methylated melamine resin solution made by Sanwa Chemical Co. (tradename: NIKLAC MS-11), 7.1 wt parts of methyl isobutyl ketone and 10.7 wt parts of toluene as solvents; and mixing them by agitation. This liquid blend was applied and dried to form a focusing layer (4c) having an average thickness of 10 µm. The total average thickness of the three-layer focusing layer after drying was 21 µm.

On the surface of this focusing layer (4c) aluminum of purity not lower than 99.99% was deposited by vacuum evaporation method to provide a 0.1 µm-thick specular reflective layer, thus making an intermediate product 11.

The adhesive layer (7) on the adhesive sheet 1 was stuck on the vapor-deposited aluminum surface of the intermediate product 11, and the release paper on which the adhesive layer (7) was laminated was removed. Thus exposed adhesive surface was stuck on a substrate (8), and the 75 µm-thick transparent polyethylene terephthalate film made by Teijin Ltd. (tradename: TEIJIN TETRON FILM S-75), which was used as the carrier film, was peeled off. Thus a retroreflective sheeting of Example 11 according to the present invention was obtained.

### Example 12

A liquid blend was prepared by adding to 100 wt parts of an acrylic resin solution made by Nippon Carbide Industries Co., Inc. (tradename: NISSETSU RS-1200) and 14 wt parts of a methylated melamine resin solution made by Sanwa Chemical Co. (tradename: NIKALAC MS-11), 21.1 wt parts of methyl isobutyl ketone and 5.3 wt parts of toluene as solvents, and mixing them by agitation. The blend was applied onto a 75 µm-thick, transparent polyethylene terephthalate film made by TEIJIN Ltd. (tradename: TEIJIN TETRON FILM S-75) which was used as the process film, and dried to form the surface layer (1) having a dry thickness of 18 µm.

Further on the above surface layer a liquid blend formed by mixing and stirring, with 100 wt parts of an acrylic resin solution made by Nippon Carbide Industries Co., Inc. (tradename: NISSETSU RS-3000) and 12 wt parts of an isocyanate crosslinking agent made by SUMIKA Bayer Urethane Co. (tradename: SUMIDUR N-75), 22.6 wt parts of methyl isobutyl ketone and 9.7 wt parts of toluene as solvents, was applied and dried, to provide a holding layer (2) having a thickness after drying of 27 µm.

In this holding layer (2) micro glass beads (3) having a refractive index of 2.20 and an average particle diameter of about 65 µm, made by Kabushiki Kaisha Union (tradename: UNIBEADS U-45NHAC) were embedded by 50 - 80% of the micro glass beads' diameter.

Then on the micro glass beads-embedded surface, a silicon compound made by Dow Corning Toray Silicone Co., Ltd. (tradename: SR2405) was applied and dried to provide a focusing layer (4a) having an average thickness of 3 µm.

A liquid-blend was prepared by adding to 100 wt parts of an acrylic resin solution made by Nippon Carbide Industries Co., Inc. (tradename: NISSETSU RS-5000) and 5.5 wt parts of a methylated melamine resin solution made by Sanwa Chemical Co. (tradename: NIKLAC MS-11), 7.1 wt parts of methyl isobutyl ketone and 10.7 wt parts of toluene as solvents; and mixing them by agitation. This liquid blend was applied onto the focusing layer (4a) and dried to form a focusing layer (4b) having an average dry thickness of 18 µm:

On the surface of this focusing layer (4b) aluminum of purity not lower than 99.99% was deposited by vacuum evaporation method to provide a 0.1 µm-thick specular reflective layer, thus making an intermediate product 12.

The adhesive layer (7) on the adhesive sheet 1 was stuck on the vapor-deposited aluminum surface of the intermediate product 12, and the release paper on which the adhesive layer (7) was laminated was removed. Thus exposed adhesive surface was stuck on a substrate (8), and the 75 µm-thick transparent polyethylene terephthalate film made by Teijin Ltd. (tradename: TEIJIN TETRON FILM S-75), which was used as the carrier film, was peeled off. Thus a retroreflective sheeting of Example 12 of the present invention having a cross-sectional structure as illustrated in Fig. 7 was obtained.

### Example 13

A liquid blend was prepared by adding to 100 wt parts of an acrylic resin solution made by Nippon Carbide Industries Co., Inc. (tradename: NISSETSU RS-1200) and 14 wt parts of a methylated melamine resin solution made by Sanwa Chemical Co. (tradename: NIKALAC MS-11), 21.1 wt parts of methyl isobutyl ketone and 5.3 wt parts of toluene as solvents, and mixing them by agitation. The blend was applied onto a 75 µm-thick, transparent polyethylene terephthalate film made by TEIJIN Ltd. (tradename: TEIJIN TETRON FILM S-75) which was used as the process film with a coater, and dried to form the surface layer (1) having a dry thickness of 18 µm.

Further on the above surface layer a liquid blend formed by mixing and stirring, with 100 wt parts of an acrylic resin solution made by Nippon Carbide Industries Co., Inc. (tradename: NISSETSU RS-3000) and 12 wt parts of an isocyanate crosslinking agent made by SUMIKA Bayer Urethane Co. (tradename: SUMIDUR N-75), 22.6 wt parts of methyl isobutyl ketone and 9.7 wt parts of toluene as solvents, was applied and dried, to provide a holding layer (2) having a thickness after drying of 27 µm.

In this holding layer (2) micro glass beads (3) having a refractive index of 2.20 and an average particle diameter of about 65 µm, made by Kabushiki Kaisha Union (tradename: UNIBEADS U-45NHAC) were embedded by 50 - 80% of the micro glass beads' diameter.

Then on the micro glass beads-embedded surface, a fluorine-containing resin made by Asahi Glass Co. Ltd. (tradename: LUMIFLON LF-100) was applied and dried to provide a focusing layer (4a) having an average thickness of 1 µm.

A liquid-blend was prepared by adding to 100 wt parts of an acrylic resin solution of a butyl acrylate/methyl methacrylate/acrylic acid copolymer made by Nippon Carbide Industries Co., Inc. (tradename: NISSETSU RS-5000) and 5.5 wt parts of a methylated melamine resin solution made by Sanwa Chemical Co. (tradename: NIKLAC MS-11), 7.1 wt parts of methyl isobutyl ketone and 10.7 wt parts of toluene as solvents; and mixing them by agitation. This liquid blend was applied and dried to form a focusing layer (4b) having an average thickness of 20 µm.

On the surface of this focusing layer (4b) aluminum of purity not lower than 99.99% was deposited by vacuum evaporation method to provide a 0.1 µm-thick specular reflective layer, thus making an intermediate product 13.

The adhesive layer (7) on the adhesive sheet 1 was stuck on the vapor-deposited aluminum surface of the intermediate product 13, and the release paper on which the adhesive layer (7) was laminated was removed. Thus exposed adhesive surface was stuck on a substrate (8), and the 75 µm-thick transparent polyethylene terephthalate film made by Teijin Ltd. (tradename: TEIJIN TETRON FILM S-75), which was used as the carrier film, was peeled off. Thus a retroreflective sheeting of Example 13 of the present invention having a cross-sectional structure as illustrated in Fig. 7 was obtained.

### Example 14

A liquid blend was prepared by adding to 100 wt parts of an acrylic resin solution made by Nippon Carbide Industries Co., Inc. (tradename: NISSETSU RS-1200) and 14 wt parts of a methylated melamine resin solution made by Sanwa Chemical Co. (tradename: NIKALAC MS-11), 21.1 wt parts of methyl isobutyl ketone and 5.3 wt parts of toluene as solvents, and mixing them by agitation. The blend was applied onto a 75 µm-trick, transparent polyethylene terephthalate film made by TEIJIN Ltd. (tradename: TEIJIN TETRON FILM S-75) and dried to form the surface layer (1) having a dry thickness of 18 µm.

Further on the above surface layer a liquid blend formed by mixing and stirring, with 100 wt parts of an acrylic resin solution made by Nippon Carbide Industries Co., Inc. (tradename: NISSETSU RS-3000) and 12 wt parts of an isocyanate crosslinking agent made by SUMIKA Bayer Urethane Co. (tradename: SUMIDUR N-75), 22.6 wt parts of methyl isobutyl ketone and 9.7 wt parts of toluene as solvents, was applied and dried, to provide a holding layer having a thickness after drying of 27 µm.

In this holding layer (2) micro glass beads (3) having a refractive index of 2.20 and an average particle diameter of about 65 µm, made by Kabushiki Kaisha Union (tradename: UNIBEADS U-45NHAC) were embedded by 50 - 80% of the micro glass beads' diameter.

Then on the micro glass beads surface a 20% butyl acetate solution of cellulose derivative made by Eastman Chemical Co. (tradename: CAB-381 - 0.5) was applied and dried to provide a focusing layer (4a) having an average thickness of 3 µm.

A liquid-blend was prepared by adding to 100 wt parts of an acrylic resin solution of a butyl acrylate/methyl methacrylate/acrylic acid copolymer made by Nippon Carbide Industries Co., Inc. (tradename: NISSETSU RS-5000) and 5.5 wt parts of a methylated melamine resin solution made by Sanwa Chemical Co. (tradename: NIKLAC MS-11), 7.1 wt parts of methyl isobutyl ketone and 10.7 wt parts of toluene as solvents; and mixing them by agitation. This liquid blend was applied and dried to form a focusing layer (4b) having an average thickness of 18 µm.

On the surface of this focusing layer (4b) aluminum of purity not lower than 99.99% was deposited by vacuum evaporation method to provide a 0.1 µm-thick specular reflective layer, thus making an intermediate product 14.

The adhesive layer (7) on the adhesive sheet 1 was stuck on the vapor-deposited aluminum surface of the intermediate product 14, and the release paper on which the adhesive layer (7) was laminated was removed. Thus exposed adhesive surface was stuck on a substrate (8), and the 75 µm-thick transparent polyethylene terephthalate film made by Teijin Ltd. (tradename: TEIJIN TETRON FILM S-75) was peeled off. Thus a retroreflective sheeting of Example 14 of the present invention having a cross-sectional structure as illustrated in Fig. 7 was obtained.

### Example 15

A liquid blend was prepared by adding to 100 wt parts of an acrylic resin solution made by Nippon Carbide Industries Co., Inc. (tradename: NISSETSU RS-1200) and 14 wt parts of a methylated melamine resin solution made by Sanwa Chemical Co. (tradename: NIKALAC MS-11), 21.1 wt parts of methyl isobutyl ketone and 5.3 wt parts of toluene as solvents, and mixing them by agitation. The blend was applied onto a 75 µm-thick, transparent polyethylene terephthalate film made by TEIJIN Ltd. (tradename: TEIJIN TETRON FILM S-75) and dried to form the surface layer (1) having a dry thickness of 18 µm

. Further on the above surface layer a liquid blend formed by mixing and stirring, with 100 wt parts of an acrylic resin solution made by Nippon Carbide Industries Co., Inc. (tradename: NISSETSU RS-3000) and 12 wt parts of an isocyanate crosslinking agent made by SUMIKA Bayer Urethane Co. (tradename: SUMIDUR N-75), 22.6 wt parts of methyl isobutyl ketone and 9.7 wt parts of toluene as solvents, was applied and dried, to provide a holding layer (2) having a thickness after drying of 27 µm.

In this holding layer (2) micro glass beads (3) having a refractive index of 2.20 and an average particle diameter of about 65 µm, made by Kabushiki Kaisha Union (tradename: UNIBEADS U-45NHAC) were embedded by 50 - 80% of the micro glass beads' diameter.

Then on the micro glass beads-embedded surface, a liquid blend of 50 wt parts of an acrylic resin solution made by Nippon Carbide Industries Co., Inc. (tradename: NISSETSU MM-075A1) with 80 wt part of a 20% butyl acetate solution of cellulose derivative made by Eastman Chemical Co. (tradename: CAB-381 - 0.5) was applied and dried to provide a focusing layer (4a) having an average thickness of 4 µm.

A liquid-blend was prepared by adding to 100 wt parts of an acrylic resin solution of a butyl acrylate/methyl methacrylate/acrylic acid copolymer made by Nippon Carbide Industries Co., Inc. (tradename: NISSETSU RS-5000) and 5.5 wt parts of a methylated melamine resin solution made by Sanwa Chemical Co. (tradename: NIKLAC MS-11), 7.1 wt parts of methyl isobutyl ketone and 10.7 wt parts of toluene as solvents; and mixing them by agitation. This liquid blend was applied and dried to form a focusing layer (4b) having an average thickness of 17 µm.

On the surface of this focusing layer (4b) aluminum of purity not lower than 99.99% was deposited by vacuum evaporation method to provide a 0.1 µm-thick specular reflective layer, thus making an intermediate product 15.

The adhesive layer (7) on the adhesive sheet 1 was stuck on the vapor-deposited aluminum surface of the intermediate product 15, and the release paper on which the adhesive layer (7) was laminated was removed. Thus exposed adhesive surface was stuck on a substrate (8), and the 75 µm-thick transparent polyethylene terephthalate film made by Teijin Ltd. (tradename: TEIJIN TETRON FILM S-75) was peeled off. Thus a retroreflective sheeting of Example 15 of the present invention having a cross-sectional structure as illustrated in Fig. 7 was obtained.

### Example 16

Example 1 was repeated except that the focusing layer (4) having an average dry thickness of 21 µm formed by applying onto the micro glass beads (3)-embedded surface, a toluene solution having a non-volatile component content of 20 wt% of vinylcyclopentanorbornene resin made by JSR Kabushiki Kaisha (tradename: ARTON FX4727), which has the properties as shown in later appearing Table 1, with a coater and drying the same, was replaced by the following:
a focusing layer (4a) having an average thickness of 20.5 µm, which was formed by applying a liquid blend of 100 wt parts of an acrylic resin solution made by Nippon Carbide Industries Co., Inc. (tradename: NISSETSU RS-5000) with 5.5 wt parts of a methylated melamine resin solution made by Sanwa Chemical Co. (tradename: NIKALAC MS-11), 7.1 wt parts of methyl isobutyl ketone and 10.7 wt parts of toluene, and drying the same, the acrylic resin solution (NISSETSU RS-5000) being made of a butyl acrylate/methyl methacrylate/acrylic acid copolymer having a weight-average molecular weight of 250,000, as diluted with a solvent mixture of toluene/xylene/ethyl acetate/butanol at the blend radios of 13/49/28/10 to a non-volatile component content of 30%, and
a focusing layer (4b) which was formed on the focusing layer (4a) by applying a liquid blend of F5420/SZ6030/MIBK at the ratios of 41/59/203 and drying the same,
the combined average thickness of the focusing layers (4a) and (4b) being 21 µm.

Thus a retroreflective sheeting of Example 16 according to the present invention was obtained.

### Example 17

Example 16 was repeated except that the average thickness of the focusing layer (4a) was changed to 20 µm, and the focusing layer (4b) was formed by applying a liquid blend of F5420/SZ6030/MIBK at the ratios of 77/23/93 and drying the same, to make the combined average thickness with the focusing layer (4a) 21 µm. Thus a retroreflective sheeting of Example 17 according to the present invention was obtained.

### Example 18

Example 16 was repeated except that the average thickness of the focusing layer (4a) was changed to 19.5 µm; a focusing layer (4b) was formed by applying a liquid blend of SZ6030/MIBK at the ratio of 59/203 and drying the same, making the combined average thickness with the focusing layer (4a) 20 µm; and then a focusing layer (4c) was formed by applying a liquid blend of F5420/SZ6030/MIBK at the ratios of 77/23/93 and drying the same, making the combined average thickness with the focusing layers (4a) and (4b) 21 µm. Thus a retroreflective sheeting of Example 18 according to the present invention was obtained.

### Example 19

This Example shows an embodiment similar to Example 18, except that the order of the focusing layer (4a) and the focusing layer (4b) was exchanged. That is, the focusing layer (4a) having an average thickness of 1 µm was formed by applying a liquid blend of SZ6030/MIBK at the ratio of 59/203 and drying the same. Successively, the focusing layer (4b) was formed by applying a liquid blend of 100 wt parts of an acrylic resin solution made by Nippon Carbide Industries Co., Inc. (tradename: NISSETSU RS-5000) with 5.5 wt parts of a methylated melamine resin solution made by Sanwa Chemical Co. (tradename: NIKALAC MS-11), 7.1 wt parts of methyl isobutyl ketone and 10.7 wt parts of toluene as solvents, and drying the same, the acrylic resin solution (NISSETSU RS-5000) being made of a butyl acrylate/methyl methacrylate/acrylic acid copolymer having a weight-average molecular weight of 250,000, as diluted with a solvent mixture of toluene/xylene/ethyl acetate/butanol at the blend radios of 13/49/28/10 to a non-volatile component content of 30%. The combined average thickness with the forcusing layer (4a) was 20 µm. Successively, a focusing layer (4c) was formed by applying a liquid blend of F5420/SZ6030/MIBK at the ratios of 77/23/93 and drying the same, making the combined average thickness with the focusing layers (4a) and (4b) 21 µm. Thus a retroreflective sheeting of Example 19 according to the present invention was obtained.

### Example 20

This Example shows on embodiment similar to Example 19, except that the order of the focusing layer (4b) and the focusing layer (4c) was exchanged. After forming the focusing layer (4a) of Example 19, a focusing layer (4b) was formed by applying a liquid blend of F5420/SZ6030/MIBK at the ratios of 77/23/93 and drying the same, making the combined average thickness with (4a) 2 µm. Successively, a focusing layer (4c) was formed by applying a liquid blend of 100 wt parts of an acrylic resin solution made by Nippon Carbide Industries Co., Inc. (tradename: NISSETSU RS-5000) with 5.5 wt parts of a methylated melamine resin solution made by Sanwa Chemical Co. (tradename: NIKALAC MS-11), 7.1 wt parts of methyl isobutyl ketone and 10.7 wt parts of toluene as solvents, and drying the same, the acrylic resin solution (NISSETSU RS-5000) being made of a butyl acrylate/methyl methacrylate/acrylic acid copolymer having a weight-average molecular weight of 250,000, as diluted with a solvent mixture of toluene/xylene/ethyl acetate/butanol at the blend radios of 13/49/28/10 to a non-volatile component content of 30%. The combined average thickness of the focusing layers (4a), (4b) and (4c) was 21 µm. Thus a retroreflective sheeting of Example 20 according to the present invention was obtained.

### Example 21

Example 1 was repeated except that the focusing layer (4) having an average dry thickness of 21 µm formed by applying onto the micro glass beads (3)-embedded surface, a toluene solution having a non-volatile component content of 20 wt% of vinylcyclopentanorbornene resin made by JSR Kabushiki Kaisha (tradename: ARTON FX4727), which has the properties as shown in later appearing Table 1, and drying the same, was replaced by the following:
a focusing layer (4a) having an average thickness of 20 µm, which was formed by applying a liquid blend of 100 wt parts of an acrylic resin solution made by Nippon Carbide Industries Co., Inc. (tradename: NISSETSU RS-5000) with 5.5 wt parts of a methylated melamine resin solution made by Sanwa Chemical Co. (tradename: NIKALAC MS-11), 7.1 wt parts of methyl isobutyl ketone and 10.7 wt parts of toluene as solvents, and drying the same; a focusing layer (4b) made of a liquid blend of SZ6030/RS-5000/MIBK at the ratios of 10/90/200, having a thickness of 21 µm as combined with the focusing layer (4a);
and another focusing layer (4c) made of a liquid blend of F5420/MIBK at the ratio of 5/95, having a thickness of 22 µm as combined with the focusing layers(4a) and (4b).

Thus a retroreflective sheeting of Example 21 according to the present invention was obtained.

### Example 22

Example 21 was repeated except that the composition of the focusing layer (4b) was changed to SZ6030/RS-5000/MIBK at the ratios of 50/50/500, to provide a retroreflective sheeting of Example 22 according to the present invention.

### Example 23

Example 21 was repeated except that the composition of the focusing layer (4b) was changed to SZ6030/RS-5000/MIBK at the ratios of 50/10/500, to provide a retroreflective sheeting of Example 23 according to the present invention.

### Example 24

Example 21 was repeated except that the composition of the focusing layer (4c) was changed to F5420/SZ6030/MIBK at the ratios of 77/23/200, to provide a retroreflective sheeting of Example 24 according to the present invention.

### Example 25

Example 22 was repeated except that the composition of the focusing layer (4c) was changed to F5420/SZ6030/MIBK at the ratios of 77/23/200, to provide a retroreflective sheeting of Example 25 according to the present invention.

### Example 26

Example 23 was repeated except that the composition of the focusing layer (4c) was changed to F5420/SZ6030/MIBK at the ratios of 77/23/200, to provide a retroreflective sheeting of Example 26 according to the present invention.

### Example 27

Example 1 was repeated except that the focusing layer (4) having an average dry thickness of 21 µm formed by applying onto the micro glass beads (3)-embedded surface, a toluene solution having a non-volatile component content of 20 wt% of vinylcyclopentanorbornene resin made by JSR Kabushiki Kaisha (tradename: ARTON FX4727), which has the properties as shown in later appearing Table 1, and drying the same, was replaced by the following:
a focusing layer (4a) having an average thickness of 20 µm, which was formed by applying a liquid blend of 100 wt parts of an acrylic resin solution made by Nippon Carbide Industries Co., Inc. (tradename: NISSETSU RS-5000) with 5.5 wt parts of a methylated melamine resin solution made by Sanwa Chemical Co. (tradename: NIKALAC MS-11), 7.1 wt parts of methyl isobutyl ketone and 10.7 wt parts of toluene as solvents, and drying the same; a 1 µm-thick focusing layer (4b) made of a liquid blend of F5420/MIBK at the ratio of 5/95; and another focusing layer (4c) made of SZ6030/RS-5000/MIBK at the ratios of 10/90/500, having a thickness of 22 µm as combined with focusing layers (4a) and (4b).

Thus a retroreflective sheeting of Example 27 according to the present invention was obtained.

### Example 28

Examples 27 was repeated except that the composition of the focusing layer (4b) was changed to SZ6030/RS-5000/MIBK at the ratios of 50/50/500.

Thus a retroreflective sheeting of Example 28 according to the present invention was obtained.

### Example 29

Examples 27 was repeated except that the composition of the focusing layer (4b) was changed to SZ6030/RS-5000/MIBK at the ratios of 90/10/500.

Thus a retroreflective sheeting of Example 29 according to the present invention was obtained.

### Example 30

Example 27 was repeated except that the composition of the focusing layer (4b) was changed to F5420/SZ6030/MIBK at the ratios of 77/23/200, to provide a retroreflective sheeting of Example 30 according to the present invention.

### Example 31

Example 28 was repeated except that the composition of the focusing layer (4b) was changed to F5420/SZ6030/MIBK at the ratios of 77/23/200, to provide a retroreflective sheeting of Example 31 according to the present invention.

### Example 32

Example 29 was repeated except that the composition of the focusing layer (4b) was changed to F5420/SZ6030/MIBK at the ratios of 77/23/200, to provide a retroreflective sheeting of Example 32 according to the present invention.

### Comparative Example 1

A comparative retroreflective sheeting 1 having the same cross-sectional structure to that as shown in Fig. 1 was prepared in the same manner as Example 1, except that the resin constituting the focusing layer (4) was made of a liquid-blend which was prepared by adding to 100 wt parts of an acrylic resin solution made by Nippon Carbide Industries Co., Inc. (tradename: NISSETSU RS-5000) and 5.5 wt parts of a methylated melamine resin solution made by Sanwa Chemical Co. (tradename: NIKLAC MS-11), 7.1 wt parts of methyl isobutyl ketone and 10.7 wt parts of toluene as solvents, and mixing them by agitation.

Thus obtained comparative retroreflective sheeting 1 was measured of its peeling strength, state of peeling, retroreflective performance and elongation-at-break, and subjected to an accelerated heat resistance test.

Its peeling strength was 16.0N/25 mm, and the reflective sheeting was peeled off between the adhesive layer (7) and the substrate (8).

The retroreflective performance was 107 cd/1x/m², which was satisfactory for the purpose of the present invention.

The elongation-at-break was 32%, which was satisfactory for the purpose of the present invention.

In the accelerated heat resistance test, the reflective sheeting was peeled off between the adhesive layer (7) and the substrate (8).

As above, the comparative retroreflective sheeting 1 as obtained in Comparative Example 1, although it had a high peeling strength, peeled off between the adhesive layer (7) of the reflective sheet and substrate (8), and failed to satisfy the purpose of this invention.

### Comparative Example 2

A comparative retroreflective sheeting 2 having the same cross-sectional structure to that as shown in Fig. 7 was prepared in the same manner as Example 3, except that a vinyl chloride resin made by Nippon Carbide Industries Co., Inc. (tradename Hi-S Film N-15F) was used as the resin to form the surface layer; a resin formed by blending 100 wt parts of an acrylic resin solution made by Nippon Carbide Industries Co., Inc. (tradename: NISSETSU RS-5000) with 5.5 wt parts of a methylated melamine resin solution made by Sanwa Chemical Co. (tradename: NIKLAC MS-11) was used to form the focusing layer (4a); and a liquid blend formed by adding to 100 wt parts of a polyester resin solution made by Mitsui Chemicals Co. (tradename: ORESTAR Q-203) and 11.6 wt parts of methylated melamine resin solution made by Sanwa Chemical Co. (tradename: NIKALAC MS-11), 33.8 wt parts of methyl isobutyl ketone and 14.5 wt parts of toluene as solvents and mixing them by agitation, was used as the resin to form the focusing layer (4b).

Thus obtained comparative retroreflective sheeting 2 was measured of its peeling strength, state of peeling, retroreflective performance and elongation-at-break, and subjected to an accelerated heat resistance test.

Its peeling strength was 15.0 N/25 mm, and the reflective sheeting was peeled off between the adhesive layer (7) and the substrate (8).

The retroreflective performance was 95 cd/1x/m², which was satisfactory for the purpose of the present invention.

The elongation-at-break was, however, 150%, and the desired state of peeling was not obtained and the purpose of this invention was not satisfied.

In the accelerated heat resistance test, the reflective sheeting was peeled off between the adhesive layer (7) and the substrate (8).

As above, the comparative retroreflective sheeting 2 as obtained in Comparative Example 2, although it had a high peeling strength, peeled off between the adhesive layer (7) of the reflective sheet and substrate (8), and failed to satisfy the purpose of this invention.

### Comparative Example 3

A comparative retroreflective sheeting 3 having the same cross-sectional structure to that as shown in Fig. 7 was prepared in the same manner as Example 3, except that a liquid blend obtained by mixing by agitation 100 wt parts of an acrylic resin solution made by Nippon Carbide Industries Co., Inc. (tradename: NISSETSU RS-5000), 108 wt parts of CAB solution (Eastman Chemical Co., tradename, CAB-381-0.5, butyl acetate solution of CAB having a solid content of 20%) and 5.5 wt parts of methylated melamine resin solution made by Sanwa Chemical Co. (tradename: NIKALAC MS-11), with 2.4 wt parts of methyl isobutyl ketone and 3.7 wt parts of toluene as solvents, was used as the resin to form the focusing layer.

Thus obtained comparative retroreflective sheeting 3 was measured of its peeling strength, state of peeling, retroreflective performance and elongation-at-break, and subjected to an accelerated heat resistance test.

Its peeling strength was 8.5 N/25 mm, and the reflective sheeting was peeled off between the adhesive layer (7) and the substrate (8).

The retroreflective performance was 80 cd/1x/m², which was satisfactory for the purpose of the present invention. The elongation-at-break was 32%, which was satisfactory for the purpose of the present invention.

In the accelerated heat resistance test, the reflective sheeting was peeled off between the adhesive layer (7) and the substrate (8).

As above, the comparative retroreflective sheeting 3 peeled off between the adhesive sheet (7) and the substrate (8), and was unsatisfactory for the purpose of the present invention.

Performances of the resins used for the focusing layers in the retroreflective sheetings made in the foregoing Examples and Comparative Examples are shown in Table 1 for comparison.

The resin used for the focusing layer (4) in Examples 1-4 and Examples 6 - 11 was vinylcyclopentanorbornene resin which is an alicyclic polyolefin resin. The resin used in Example 5 was an alicyclic acrylic resin. The resin used for the focusing layer (4) in Example 12 was a silicon-containing compound, that in Example 13 was a fluorine-containing resin, that in Example 14 was a cellulose derivative, and that in Example 15, an acrylic resin to which a cellulose derivative was added. On the other hand, the resins used in Comparative Examples 1-2 were acrylic resins, and that used in Comparative Example 3 was an acrylic resin to which a cellulose acetate butyrate resin was added.

All of the alicyclic polyolefin resins, alicyclic acrylic resins and cellulose derivative used in those Examples had the glass transition temperatures not lower than 95°C, while those known resins used in the Comparative Examples had glass transition temperatures not higher than 35°C. Generally speaking, when a resin is exposed to temperatures higher than its glass transition temperature, its adhesion to a layer adjacent thereto becomes more intimate. Whereas, in the environments in which retroreflective articles such as ordinary traffic signs or number plates on vehicles are used, the temperature seldom exceeds 100°C. Therefore, such a difference in glass transition temperature is preferred, because it prevents peeling strength between the focusing layer (4) and the glass beads (3) and/or the holding layer (2) from increasing, when retroreflective sheetings according to the present invention are exposed to high temperature environments in actual use.

All of those alicyclic polyolefin resins, alicyclic acrylic resins, silicon-derived resins and fluorine-containing resin had the water absorption not higher than 1.0%, by contrast to the known resins used in Comparative Examples, which had the water absorption of at least 2.3%. Such difference in water absorption is preferred, because it prevents unintended peeling of the focusing layer (4) during actual use of retroreflective sheeting in humid environments caused by rain, mist, dew and the like, due to water absorption.

All of those alicyclic polyolefin resins, alicyclic acrylic resins, cellulose derivatives silicon-derived resins and fluorine-containing resin have the percentile dimensional change ratio after moisture absorption not more than 0.12%, while those of the known resins used in Comparative Examples had large percentile dimensional change ratio after moisture absorption, such as at least 0.26%. Where percentile dimensional change ratio after moisture absorption is large, when the retroreflective sheeting is exposed to humid environments caused by rain, mist, dew and the like in actual use, its focusing layer (4) absorbs moisture to induce unintended peeling during use, which is undesirable.

Furthermore, the total light transmission of those resins used in Examples is invariably as high as at least 88%, similar to the total light transmission of known resins used in Comparative Examples, which allow the retroreflective sheetings to maintain excellent retroreflectivity.

**TABLE 1**

| | Resin used for focus-adjusting layer (4a) | | Glass transition temp. (°c) | Water absorption (%) | Percentile dimensional change (%) | Total light transmission (%) |
|---|---|---|---|---|---|---|
| | Resin Structure | Tradename | | | | |
| Example 1* | vinylcyclopentanorbornene resin | ARTON FX4727 | 120 | 0.2 | 0.02 | 94 |
| Example 2* | vinylcyclopentanorbornene resin | ARTON FX4727 | 120 | 0.2 | 0.02 | 94 |
| Example 3 | vinylcyclopentanorbornene resin | ARTON FX4727 | 120 | 0.2 | 0.02 | 94 |
| Example 4 | vinylcyclopentanorbornene resin | ARTON FX4727 | 120 | 0. 2 | 0.02 | 94 |
| Example 5 | alicyclic acrylic resin | OPTOREZ OZ1000 | 105 | 1.0 | 0.09 | 95 |
| Example 6 | vinylcyclopentanorbornene resin | CARTON FX4727 | 120 | 0.2 | 0.02 | 94 |
| Example 7 | vinylcyclopentanorbornene resin | CARTON FX4727 | 120 | 0.2 | 0.02 | 94 |
| Example 8 | vinylcyclopentanorbornene resin | ARTON FX4727 | 120 | 0.2 | 0.02 | 94 |
| Example 9 | vinylcyclopentanorbornene resin | ARTON FX4727 | 120 | 0.2 | 0.02 | 94 |
| Example 10 | vinylcyclopentanorbornene resin | ARTON FX4727 | 120 | 0.2 | 0.02 | 94 |
| Example 11 | vinylcyclopentanorbornene resin | CARTON FX4727 | 120 | 0.2 | 0.02 | 94 |
| Example 12 | silicon-derived resin | SR2405 | - | 0.3 | 0.04 | 88 |
| Example 13 | fluorine-containing resin | LUMI-FLON LF-100 | - | 0.3 | 0.03 | 85 |
| Example 14 | cellulose derivative | CAB381-0.5 | 130 | 1.7 | 0.11 | 89 |
| Example 15 | acrylic resin cellulose derivative | MM075A1 CAB381-0.5 | 120 | 1.8 | 0.12 | 90 |
| Comparative Example 1 | acrylic resin | RS5000 | 22 | 2.3 | 0.30 | 92 |
| Comparative Example 2 | acrylic resin | RS5000 | 22 | 2.3 | 0.30 | 92 |
| Comparative Example 3 | acrylic resin cellulose acetate butyrate | RS5000 CAB381-0.5 | 35 | 1.8 | 0.26 | 90 |

| | | | | | | |
|---|---|---|---|---|---|---|
| *for comparison General concept of Tg does not apply to silicon-containing compound and fluorine-containing resin. | | | | | | |

The results of the performance tests of the test pieces as prepared in above Examples 1 - 15 and Comparative Examples 1 - 3 are shown in Table 2.

All of the retroreflective sheetings of the present invention as made in Examples 1 - 15 exhibited retroreflectivity similar to those of Comparatice Examples 1-3.

Peel strength of the retroreflective sheetings of Examples 1-15 was invariably not higher than 4.5 N/25 mm. They did not peel off between the substrate and the adhesive layer. The peeling took place either between the focusing layer, and glass beads and holding layer, or by breakage of the focusing layer itself and the sheetings' retroreflectivity was lost. By contrast, peel strength of the comparative retrorefletive sheetings of Comparative Examples 1 - 3 was as high as 8.5 - 16.0 N/25 mm, and in all of them peeling took place between the adhesive layer and substrate, and the peeled-off reflective sheetings retained their retroreflectivity.

Furthermore, also after the accelerated heat resistance test, retroreflective sheetings as formed in Examples 1-15 did not peel of between substrate and the adhesive layer, but their peeling resulted from easy separation of the focusing layer from the glass beads and holding layer, or from breakage of the focusing layer itself. Hence their retroreflectivity was lost. By contrast, peeling of the comparative retroreflective sheetings of Comparative Examples 1- 3 according to conventional art invariably took place between the adhesive layer and substrate, and the peeled sheetings retained retroreflectivity.

Although the retroreflective sheetings as formed in Examples 1-5 and 7-15 had elongation-at-break values as small as 26 - 33%, still peeling of the focusing layer (4) from the glass beads (3) and holding layer (2) easily took place and they completely lost their retroreflectivity. On the other hand, disclosed elongation-at-break of the known retroreflective sheeting provided with a release layer was as large as 80%. Again, those retroreflective sheetings of Comparative Examples 1 and 3 also had small elongation-at-break values, i.e., 32%. Nevertheless, all of them peeled off between their adhesive layer and substrate and retained their retroreflectivity.

**TABLE 2**

| | Peeling Strength (N/25 mm) | State of Peeling (-) | Retro-reflectivity (cd/1x/m²) | Elongation-at-break (%) | Accelerated Heat Resistance Test (-) |
|---|---|---|---|---|---|
| Example 1* | 0.2 | A1 | 95 | 26 | A1 |
| Example 2* | 0.4 | A1 | 93 | 27 | A1 |
| Example 3 | 1.0 | A1 | 94 | 29 | A1 |
| Example 4 | 1.1 | B | 89 | 29 | B |
| Example 5 | 1.4 | A1 | 90 | 28 | A1 |
| Example 6 | 1.2 | A1 | 92 | 93 | A1 |
| Example 7 | 1.1 | A1 | 91 | 36 | A1 |
| Example 8 | 1.4 | A1 | 85 | 33 | A1 |
| Example 9 | 1.2 | A1 | 94 | 28 | A1 |
| Example 10 | 1.0 | A1 | 92 | 28 | A1 |
| Example 11 | 1.9 | A1 | 89 | 21 | A1 |
| Example 12 | 1.3 | A1 | 81 | 28 | A1 |
| Example 13 | 1.1 | A1 | 84 | 27 | A1 |
| Example 14 | 3.1 | A1 | 88 | 29 | A1 |
| Example 15 | 4.5 | A2 | 83 | 30 | A2 |
| Comparative Example 1 | 16.0 | C | 107 | 32 | C |
| Comparative Example 2 | 15.0 | C | 95 | 150 | C |
| Comparative Example 3 | 8.5 | C | 80 | 32 | C |

| | | | | | |
|---|---|---|---|---|---|
| *for comparison | | | | | |

Results of the performance tests of the test pieces as prepared in Examples 16 - 32 were as shown in Table 3.

**TABLE 3**

| | Peeling Strength (N/25 mm) | State of Peeling (-) | Retro-reflectivity (cd/1x/m²) | Elongation-at-break (%) | Accelerated Heat Resistance Test (-) | Peeling Test of Release Paper (-) |
|---|---|---|---|---|---|---|
| Example 16 | 1.5 | E | 91 | 27 | E | E |
| Example 17 | 1.2 | E | 90 | 28 | E | E |
| Example 18 | 1.3 | F | 97 | 29 | F | F |
| Example 19 | 1.3 | F | 94 | 29 | F | F |
| Example 20 | 1.8 | C | 99 | 30 | C | H |
| Example 21 | 1.3 | F | 92 | 35 | F | F |
| Example 22 | 1.3 | F | 92 | 25 | F | F |
| Example 23 | 1.2 | F | 92 | 27 | F | F |
| Example 24 | 1.0 | F | 93 | 29 | F | F |
| Example 25 | 1.0 | F | 103 | 30 | F | F |
| Example 26 | 1.0 | F | 99 | 31 | F | F |
| Example 27 | 1.3 | A4,D,F | 92 | 31 | A4,D,F | H |
| Example 28 | 1.2 | A4,D,F | 98 | 20 | A4,D,F | H |
| Example 29 | 1.1 | A4,D,F | 97 | 30 | A4,D,F | H |
| Example 30 | 1.1 | D or F | 96 | 30 | A4.D,F | A4,D,F |
| Example 31 | 1.0 | D or F | 95 | 29 | A4, D, F | A4, D, F |
| Example 32 | 0.9 | D or F | 92 | 27 | A4, D, F | A4, D,F |

### Industrial utility

The invention can provide retroreflective sheetings which exhibit tamper-preventive effect as used in signs such as traffic signs or construction signs, number plates on vehicles such as automobiles or motorcycles, safety goods such as clothing or life preservers, marking on signboards or the like, various certification stickers, visible light-, laser beam- or infrared light-reflective type sensors and the like.

More specifically, the invention relates to retroreflective sheeting useful for various certification stickers and the like, which, when peeled off from the substrate on which it has been stuck to put it to diverted uses, loses its retroreflectivity because it is incorporated with a focusing layer formed of alicyclic polyolefin resin or acrylic resin, cellulose derivative, silicon-derived resin, fluorine-containing resin, polyurethane resin, alkyd resin, butyral resin, polyester resin or mixtures thereof and peeling takes place between the glass beads and the focusing layer, or between the focusing layers, or between the focusing layer and specular reflective layer.

## Claims

1. An enclosed lens-type retroreflective sheeting comprising at least a large number of micro glass beads (3), a holding layer (2) formed of light-transmissive resin, which holds the glass beads (3), a specular reflective layer (6) which reflects incident light, and at least one layer of focusing layer (4) formed of light-transmissive resin, which is provided between the glass beads (3) and the specular reflective layer (6), which is **characterized in that** an adhesive layer (7) is provided under the specular reflective layer (6) of the retroreflective sheeting so that it can be stuck on substrate (8) by the adhesive layer (7) and an attempt to peel off the retroreflective sheeting from the substrate (8) results in interlayer peeling of the focusing layer (4) from the glass beads (3) and /or the holding layer (2), and /or in destruction of the focusing layer (4), whereby damaging or destroying retroreflectivity, in which the resin constituting the focusing layer (4) is acrylic resin except for alicyclic acrylic resin, polyurethane resin, alkyd resin, butyral resin, polyester resin, or a mixture of two or more of these.

2. Retroreflective sheeting according to Claim 1, in which the interlayer peeling strength between the focusing layer (4) and the glass beads (3) and/or the peeling strength due to destruction of the focusing layer (4) is 0.1 - 15 N/25 mm.

3. Retroreflective sheeting according to any one of Claims 1 - 2, which is **characterized in that** a surface layer (1) formed of light-transmissive resin is installed on the holding layer (2) of the retroreflective sheeting.

4. Retroreflective sheeting according to Claim 3, which is **characterized in that** the resin constituting the surface layer (1) and/or the holding layer (2) is acrylic resin, alkyd resin or polyester resin.

5. Retroreflective sheeting according to any one of Claims 1- 4, which is **characterized by** having at least two focusing layers (4a, 4b,...), at least one of the focusing layers being made of acrylic resin except for alicyclic acrylic resin, butyral resin, polyester resin or a mixture of two or more of these resins.

6. Retroreflective sheeting according to any one of Claims 1 - 5, which is **characterized in that** the peeling strength of the focusing layer (4) from the glass beads (3) and/or the holding layer (2) and/or from other focusing layer(s), or the peeling strength due to breakage of the focusing layer (4) is less than the peeling strength of the adhesive layer (7) of the retroreflective sheeting from the substrate (8), by at least 2 Newton (N)/25 mm.

7. Retroreflective sheeting according to any one of Claims 1 and 3 - 6 which is **characterized in that** the resin constituting the focusing layer (4) is an acrylic resin except for alicyclic acrylic resin having a glass transition temperature (Tg) of 0 - 190°C.

8. Retroreflective sheeting according to any one of Claims 3 - 6, which is **characterized in that** the resin constituting the focusing layer (4) is a polyurethane resin having a glass transition temperature (Tg) of 20 - 120°C.

9. Retroreflective sheeting according to any one of Claims 1 and 3 - 6, which is **characterized in that** the resin constituting the focusing layer (4) is a polyester resin having a glass transition temperature (Tg) of -130 - 120°C.

10. Retroreflective sheeting according to any one of Claims 1 and 3 - 6, which is **characterized in that** the polyester resin constituting the focusing layer (4) is an alkyd resin having a glass transition temperature (Tg) of 50 - 120°C.

11. Retroreflective sheeting according to any one of Claims 1 and 3 - 6, which is **characterized in that** the resin constituting the focusing layer (4) is a butyral resin, in particular, polyvinylbutyral resin, having a glass transition temperature (Tg) of 50 - 110°C.

12. Retroreflective sheeting according to any one of Claims 1 - 11, which is **characterized in that** the resin constituting the focusing layer (4) has a total light transmission of 75 - 98%.

13. Retroreflective sheeting according to any one of Claims 1 - 12, **characterized by** having an elongation-at-break not higher than 36%.

14. Retroreflective sheeting according to Claim 13, **characterized by** having an elongation-at-break not higher than 30%.

15. Retroreflective sheeting according to any one of Claims 5 - 14, which is **characterized in that** the focusing layer (4a) is partially provided in the focusing layer (4).

16. Retroreflective sheeting according to Claim 15, which is **characterized in that** the partially provided focusing layer (4a) is formed as regions independent of the glass beads (3) and/or the holding layer (2).

17. Retroreflective sheeting according to Claim 16, which is **characterized in that** the size of the independent regions forming the partially installed focusing layer (4a) is 25 - 400 mm².

18. Retroreflective sheeting according to Claim 1, which is **characterized in that** the focusing layer (4) consists of three layers, the focusing layer (4a) which is in contact with the glass beads and holding layer is an acrylic resin, the second focusing layer (4b) is a mixture of an acrylic silicon compound with an acrylic resin, and the focusing layer (4c) which is in contact with the specular reflective layer is a mixture of an acrylic silicon compound with alicyclic polyolefin resin and is installed wholly or partially.

19. Retroreflective sheeting according to Claim 1, which is **characterized in that** the focusing layer (4) consists of three layers, the focusing layer (4a) which is in contact with the glass beads and holding layer is an acrylic resin, the second focusing layer (4b) is a mixture of an acrylic silicon compound with an alicyclic polyolefin resin and is installed wholly or partially, and the focusing layer (4c) which is in contact with the specular reflective layer is a mixture of an acrylic silicon compound with an acrylic resin.

## Patentansprüche

1. Retroreflektierende Folie vom Typ mit eingeschlossener Linse, die zumindest eine große Anzahl an Mikroglasperlen (3), eine Halteschicht (2), gebildet aus lichtdurchlässigem Harz, die die Glasperlen (3) hält, eine spiegelnde Reflektionsschicht (6), die einfallendes Licht reflektiert, und zumindest eine Schicht einer fokussierenden Schicht (4), gebildet aus lichtdurchlässigem Harz, die zwischen den Glasperlen (3) und der spiegelnden Reflektionsschicht (6) angeordnet ist, umfasst, die **dadurch gekennzeichnet ist, dass** eine Klebeschicht (7) unter der spiegelnden Reflektionsschicht (6) der retroreflektierenden Folie angeordnet ist, so dass sie durch die Klebeschicht (7) an ein Substrat (8) geklebt werden kann, und ein Versuch, die retroreflektierende Folie von dem Substrat (8) abzuziehen, in einem Zwischenschicht-Abziehen der fokussierenden Schicht (4) von den Glasperlen (3) und/oder der Halteschicht (2) und/oder in der Zerstörung der fokussierenden Schicht (4) resultiert, wodurch die Retroreflektivität geschädigt oder zerstört wird, in der das Harz, das die fokussierende Schicht. (4) bildet, ein Acrylharz, mit Ausnahme von alicyclischem Acrylharz, Polyurethanharz, Alkydharz, Butyralharz, Polyesterharz oder einer Mischung von zwei oder mehreren von diesen ist.

2. Retroreflektierende Folie gemäß Anspruch 1, in der die Zwischenschicht-Abziehfestigkeit zwischen der fokussierenden Schicht (4) und den Glasperlen (3) und/oder die Abziehfestigkeit aufgrund von Zerstörung der fokussierenden Schicht (4) 0,1 - 15 N/25 mm ist.

3. Retroreflektierende Folie gemäß einem der Ansprüche 1 bis 2, die **dadurch gekennzeichnet ist, dass** eine Oberflächenschicht (1), gebildet aus lichtdurchlässigem Harz, auf der Halteschicht (2) der retroreflektierenden Folie angebracht ist.

4. Retroreflektierende Folie gemäß Anspruch 3, die **dadurch gekennzeichnet ist, dass** das Harz, das die Oberflächenschicht (1) und/oder die Halteschicht (2) bildet, Acrylharz, Alkydharz oder Polyesterharz ist.

5. Retroreflektierende Folie gemäß einem der Ansprüche 1 bis 4, die **dadurch gekennzeichnet ist, dass** sie zumindest zwei fokussierende Schichten (4a, 4b, ...) besitzt, wobei zumindest eine der fokussierenden Schichten aus Acrylharz, mit Ausnahme von alicyclischem Acrylharz, Butyralharz, Polyesterharz oder einer Mischung von zwei oder mehreren dieser Harze hergestellt ist.

6. Retroreflektierende Folie gemäß einem der Ansprüche 1 bis 5, die **dadurch gekennzeichnet ist, dass** die Abziehfestigkeit der fokussierenden Schicht (4) von den Glasperlen (3) und/oder der Halteschicht (2) und/oder von (einer) anderen fokussierenden Schicht(en), oder die Abziehfestigkeit aufgrund eines Bruchs der fokussierenden Schicht (4) um mindestens 2 Newton (N)/25 mm kleiner ist als die Abziehfestigkeit der Klebeschicht (7) der retroreflektierenden Folie von dem Substrat (8).

7. Retroreflektierende Folie gemäß einem der Ansprüche 1 und 3 bis 6, die **dadurch gekennzeichnet ist, dass** das Harz, das die fokussierende Schicht (4) bildet, ein Acrylharz, mit Ausnahme von alicyclischem Acrylharz, ist, das eine Glasübergangstemperatur (Tg) von 0 - 190°C besitzt.

8. Retroreflektierende Folie gemäß einem der Ansprüche 3 bis 6, die **dadurch gekennzeichnet ist, dass** das Harz, das die fokussierende Schicht (4) bildet, ein Polyurethanharz ist, das eine Glasübergangstemperatur (Tg) von 20 - 120°C besitzt.

9. Retroreflektierende Folie gemäß einem der Ansprüche 1 und 3 bis 6, die **dadurch gekennzeichnet ist, dass** das Harz, das die fokussierende Schicht (4) bildet, ein Polyesterharz ist, das eine Glasübergangstemperatur (Tg) von -130 - 120°C besitzt.

10. Retroreflektierende Folie gemäß einem der Ansprüche 1 und 3 bis 6, die **dadurch gekennzeichnet ist, dass** das Polyesterharz, das die fokussierende Schicht (4) bildet, ein Alkydharz ist, das eine Glasübergangstemperatur (Tg) von 50 - 120°C besitzt.

11. Retroreflektierende Folie gemäß einem der Ansprüche 1 und 3 bis 6, die **dadurch gekennzeichnet ist, dass** das Harz, das die fokussierende Schicht (4) bildet, ein Butyralharz, insbesondere ein Polyvinylbutyralharz, ist, das eine Glasübergangstemperatur (Tg) von 50 - 110°C besitzt.

12. Retroreflektierende Folie gemäß einem der Ansprüche 1 bis 11, die **dadurch gekennzeichnet ist, dass** das Harz, das die fokussierende Schicht (4) bildet, eine Gesamtlichttransmission von 75 - 98% besitzt.

13. Retroreflektierende Folie gemäß einem der Ansprüche 1 bis 12, die **dadurch gekennzeichnet ist, dass** sie eine Bruchdehnung von nicht größer als 36% besitzt.

14. Retroreflektierende Folie gemäß Anspruch 13, die **dadurch gekennzeichnet ist, dass** sie eine Bruchdehnung von nicht größer als 30% besitzt.

15. Retroreflektierende Folie gemäß einem der Ansprüche 5 bis 14, die **dadurch gekennzeichnet ist, dass** die fokussierende Schicht (4a) teilweise in der fokussierenden Schicht (4) bereitgestellt ist.

16. Retroreflektierende Folie gemäß Anspruch 15, die **dadurch gekennzeichnet ist, dass** die teilweise bereitgestellte fokussierende Schicht (4a) als Bereiche, die unabhängig von den Glasperlen (3) und/oder der Halteschicht (2) sind, gebildet ist.

17. Retroreflektierende Folie gemäß Anspruch 16, die **dadurch gekennzeichnet ist, dass** die Größe der unabhängigen Bereiche, die die teilweise angebrachte fokussierende Schicht (4a) bilden, 25 - 400 mm² ist.

18. Retroreflektierende Folie gemäß Anspruch 1, die **dadurch gekennzeichnet ist, dass** die fokussierende Schicht (4) aus drei Schichten besteht, die fokussierende Schicht (4a), die in Kontakt mit den Glasperlen und der Halteschicht steht, ein Acrylharz ist, die zweite fokussierende Schicht (4b) eine Mischung einer Acrylsiliciumverbindung mit einem Acrylharz ist, und die fokussierende Schicht (4c), die in Kontakt mit der spiegelnden Reflektionsschicht steht, eine Mischung einer Acrylsiliciumverbindung mit einem alicyclischen Polyolefinharz ist, und ganz oder teilweise angebracht ist.

19. Retroreflektierende Folie gemäß Anspruch 1, die **dadurch gekennzeichnet ist, dass** die fokussierende Schicht (4) aus drei Schichten besteht, die fokussierende Schicht (4a), die in Kontakt mit den Glasperlen und der Halteschicht steht, ein Acrylharz ist, die zweite fokussierende Schicht (4b) eine Mischung einer Acrylsiliciumverbindung mit einem alicyclischen Polyolefinharz ist, und ganz oder teilweise angebracht ist, und die fokussierende Schicht (4c), die mit der spiegelnden Reflektionsschicht in Kontakt steht, eine Mischung einer Acrylsiliciumverbindung mit einem Acrylharz ist.

## Revendications

1. Feuille rétroréfléchissante du type à lentilles incorporées comprenant au moins un grand nombre de microbilles de verre (3), une couche de maintien (2) formée de résine transmettant la lumière, qui maintient les billes de verre (3), une couche réfléchissante spéculaire (6) qui réfléchit la lumière incidente, et au moins une couche de couche de focalisation (4) formée de résine transmettant la lumière, qui est prévue entre les billes de verre (3) et la couche réfléchissante spéculaire (6), qui est **caractérisée en ce qu'**une couche adhésive (7) est prévue sous la couche réfléchissante spéculaire (6) de la feuille rétroréfléchissante afin qu'elle puisse être collée sur un substrat (8) par la couche adhésive (7) et qu'une tentative de décoller la feuille réfléchissante du substrat (8) provoque un décollage intercouche de la couche de focalisation (4) à partir des billes de verre (3) et/ou de la couche de maintien (2), et/ou à la destruction de la couche de focalisation (4), et moyennant cela, un endommagement ou une destruction du caractère rétroréfléchissant, dans laquelle la résine constituant la couche de focalisation (4) est une résine acrylique, excepté une résine acrylique alicyclique, une résine polyuréthane, une résine alkyde, une résine butyrale, une résine polyester, ou un mélange de deux ou plus de ces résines.

2. Feuille rétroréfléchissante selon la revendication 1, dans laquelle la résistance au décollement intercouche entre la couche de focalisation (4) et les billes de verre (3) et/ou la résistance au décollement due à la destruction de la couche de focalisation (4) est de 0,1 à 15 N/25 mm.

3. Feuille rétroréfléchissante selon l'une quelconque des revendications 1 et 2, qui est **caractérisée en ce qu'**une couche de surface (1) constituée de résine transmettant la lumière est installée sur une couche de maintien (2) de la feuille rétroréfléchissante.

4. Feuille rétroréfléchissante selon la revendication 3, qui est **caractérisée en ce que** la résine constituant la couche de surface (1) et/ou la couche de maintien (2) est une résine acrylique, une résine alkyde ou une résine polyester.

5. Feuille rétroréfléchissante selon l'une quelconque des revendications 1 à 4, qui est **caractérisée en ce qu'**elle possède au moins deux couches de focalisation (4a, 4b, ...), au moins une des couches de focalisation étant constituée de résine acrylique, excepté de résine acrylique alicyclique, de résine butyrale, de résine polyester ou d'un mélange d'une ou plusieurs de ces résines.

6. Feuille rétroréfléchissante selon l'une quelconque des revendications 1 à 5, qui est **caractérisée en ce que** la résistance au décollement de la couche de focalisation (4) à partir des billes de verre (3) et/ou de la couche de maintien (2) et/ou de l'autre ou des autres couches de focalisation, ou la résistance au décollement due à la rupture de la couche de focalisation (4) est inférieure à la résistance au décollement de la couche adhésive (7) de la feuille rétroréfléchissante, à partir du substrat (8), d'au moins 2 Newton (N)/25 mm.

7. Feuille rétroréfléchissante selon l'une quelconque des revendications 1 et 3 à 6 qui est **caractérisée en ce que** la résine constituant la couche de focalisation (4) est une résine acrylique, excepté la résine acrylique alicyclique, ayant une température de transition vitreuse (Tg) de 0 à 190°C.

8. Feuille rétroréfléchissante selon l'une quelconque des revendications 3 à 6, qui est **caractérisée en ce que** la résine constituant la couche de focalisation (4) est une résine polyuréthane ayant une température de transition vitreuse (Tg) de 20 à 120°C.

9. Feuille rétroréfléchissante selon l'une quelconque des revendications 1 et 3 à 6, qui est **caractérisée en ce que** la résine constituant la couche de focalisation (4) est une résine polyester ayant une température de transition vitreuse (Tg) de -130 à 120°C.

10. Feuille rétroréfléchissante selon l'une quelconque des revendications 1 et 3 à 6, qui est **caractérisée en ce que** la résine polyester constituant la couche de focalisation (4) est une résine alkyde ayant une température de transition vitreuse (Tg) de 50 à 120°C.

11. Feuille rétroréfléchissante selon l'une quelconque des revendications 1 et 3 à 6, qui est **caractérisée en ce que** la résine constituant la couche de focalisation (4) est une résine butyrale, en particulier, une résine polyvinylbutyrale, ayant une température de transition vitreuse (Tg) de 50 à 110°C.

12. Feuille rétroréfléchissante selon l'une quelconque des revendications 1 à 11, qui est **caractérisée en ce que** la résine constituant la couche de focalisation (4) a une transmission de lumière totale de 75 à 98 %.

13. Feuille rétroréfléchissante selon l'une quelconque des revendications 1 à 12, **caractérisée en ce qu'**elle présente un allongement à la rupture ne dépassant pas 36 %.

14. Feuille rétroréfléchissante selon la revendication 13, **caractérisée en ce qu'**elle présente un allongement à la rupture ne dépassant pas 30 %.

15. Feuille rétroréfléchissante selon l'une quelconque des revendications 5 à 14, qui est **caractérisée en ce que** la couche de focalisation (4a) est partiellement présente dans la couche de focalisation (4).

16. Feuille rétroréfléchissante selon la revendication 15, qui est **caractérisée en ce que** la couche de focalisation partiellement présente (4a) est sous la forme de régions indépendantes des billes de verre (3) et/ou de la couche de maintien (2).

17. Feuille rétroréfléchissante selon la revendication 16, qui est **caractérisée en ce que** la taille des régions indépendantes formant la couche de focalisation partiellement installée (4a) est de 25 à 400 mm²_{.}

18. Feuille rétroréfléchissante selon la revendication 1, qui est **caractérisée en ce que** la couche de focalisation (4) est constituée de trois couches, la couche de focalisation (4a) qui est en contact avec les billes de verre et la couche de maintien est une résine acrylique, la seconde couche de focalisation (4b) est un mélange d'un composé de silicium acrylique avec une résine acrylique, et la couche de focalisation (4c) qui est en contact avec la couche réfléchissante spéculaire est un mélange d'un composé de silicium acrylique avec une résine polyoléfine alicyclique et est totalement ou partiellement installée.

19. Feuille rétroréfléchissante selon la revendication 1, qui est **caractérisée en ce que** la couche de focalisation (4) est constituée de trois couches, la couche de focalisation (4a) qui est en contact avec les billes de verre et la couche de maintien est une résine acrylique, la seconde couche de focalisation (4b) est un mélange d'un composé de silicium acrylique avec une résine polyoléfine alicyclique et est totalement ou partiellement installée, et la couche de focalisation (4c) qui est en contact avec la couche réfléchissante spéculaire est un mélange d'un composé de silicium acrylique avec une résine acrylique.
